(19) Europäisches Patentamt
European Patent Office
Office européen des brevets

(11) Publication number: 0 292 153 A2

(12) # EUROPEAN PATENT APPLICATION

(21) Application number: 88304071.9

(22) Date of filing: 05.05.88

(51) Int. Cl.4: C08L 71/04 , C08L 23/00 , C08L 51/00

(30) Priority: 09.05.87 JP 112701/87
09.05.87 JP 112702/87
09.05.87 JP 112703/87
09.05.87 JP 112704/87
09.05.87 JP 112705/87
09.05.87 JP 112706/87
09.05.87 JP 112707/87
09.05.87 JP 112708/87
09.05.87 JP 112709/87
09.05.87 JP 112710/87
09.05.87 JP 112711/87

(43) Date of publication of application:
23.11.88 Bulletin 88/47

(84) Designated Contracting States:
AT BE CH DE ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100(JP)

(72) Inventor: Sakashita, Takeshi
1-40, Oogi-cho 3-chome
Iwakuni-shi Yamaguchi(JP)
Inventor: Itoi, Hideyuki
74-106, Oono-cho
Saeki-gun Hiroshima(JP)
Inventor: Hirose, Toshiyuki
3-5, Misono 1-chome
Ootake-shi Hiroshima(JP)

(74) Representative: Myerscough, Philip Boyd et al
J.A.Kemp & Co. 14, South Square Gray's Inn
London, WC1R 5EU(GB)

(54) **Polyphenylene ether resin composition.**

(57) A polyphenylene ether resin composition contains, (i) 100 parts by weight of a polyphenylene ether, (ii) 0 to 400 parts by weight of an aromatic vinyl polymer (I), and (iii) one or more other components compatible with the polyphenylene ether, which composition has an excellent impact resistance, heat resistance, water resistance, moldability, and solvent crack resistance, and is obtained at a low cost.

EP 0 292 153 A2

Xerox Copy Centre

# POLYPHENYLENE ETHER RESIN COMPOSITION

## BACKGROUND OF THE INVENTION

### 1. Field of the Invention

The present invention relates to a polyphenylene ether resin composition. More particularly, it relates to a polyphenylene ether resin composition containing a polyolefin, which composition has an excellent impact resistance, heat resistance, water resistance, moldability, and solvent crack resistance, for example.

### 2. Description of the Related Art

Polyphenylene ethers have an excellent heat resistance and an excellent mechanical strength, electrical characteristics, water resistance, flame retardancy, etc. and are employed for various uses as engineering plastic materials.

On the other hand, polyphenylene ethers have inferior properties due to a high melt viscosity and involve serious problems of an inferior solvent crack resistance and impact strength, and therefore it is considered that they cannot be utilized for uses for which an impact resistance is demanded, such as automobile outer body plates.

In this connection, for primarily improving the moldability of polyphenylene ethers, proposals have been made to formulate aromatic vinyl polymers such as polystyrene, rubber-modified polystyrene, styreneacrylonitrile-butadiene copolymer, in polyphenylene ethers, as disclosed in, for example, Japanese Examined Patent Publication (Kokoku) No. 43-17812, U.S. Patent 3384435. However, when an aromatic vinyl polymer as mentioned above is formulated in a polyphenylene ether, although the moldability of the polyphenylene ether may be improved, problems arise in that the heat resistance, mechanical strength, impact resistance, water resistance, and the like are greatly reduced. Particularly, since heat resistance is greatly redused, the problem arises that it becomes impossible to apply a coating of the polyphenylene ether resin composition containing an aromatic vinyl polymer.

Accordingly, for attempts have been made to improve the moldability, solvent crack resistance or impact resistance of a polyphenylene ether by formulating a polyolefin in polyphenylene ether, as disclosed in Japanese Examined Patent Publication (Kokoku) No. 42-7069. However, when a polyolefin such as polyethylene or polypropylene is formulated in a polyphenylene ether, due to a remarkably poor compatibility there between, a uniform formulation is not possible, and thus the polyphenylene ether resin composition obtained has an inferior impact resistance and a problem arises in that the molded product obtained from such resin composition peels to form laminate.

For this reason, for example, in Japanese Unexamined Patent Publication (Kokai) No. 58-103557, No. 59-100159 or 59-140257, a block copolymer of an alkenyl aromatic compound with a conjugated diene or its hydrogenated product is formulated in a polyphenylene ether resin composition to enhance the compatibility between the polyphenylene ether and the polyolefin.

Nevertheless, even if a block copolymer of an alkenyl aromatic compound with a conjugated diene or its hydrogenated product is formulated in a polyphenylene ether resin composition comprising a polyphenylene ether and a polyolefin, particularly when the polyolefin is contained in a large amount, the polyphenylene ether and the polyolefin are still not sufficiently compatible, and thus the impact resistance of the polyphenylene ether type resin composition cannot be satisfactorily improved, and the problem still remains that the molded product obtained from the resin composition peels to form laminae.

## SUMMARY OF THE INVENTION

Accordingly, the objects of the present invention are to solve the above-mentioned problems of the prior art and to provide a polyphenylene ether resin composition containing a polyphenylene ether having an excellent solvent crack resistance, impact resistance, heat resistance, water resistance and moldability, and

at a low cost, by formulating one or more polymers fully compatible there with into the polyphenylene ether.

Other objects and advantages of the present invention will be apparent from the following description.

In accordance with the present invention, there is provided a polyphenylene ether resin composition comprising:

(i) 100 parts by weight of a polyphenylene ether;

(ii) 0 to 400 parts by weight of an aromatic vinyl polymer (I);

(iii) 1 to 400 parts by weight of a polyphenylene ether-polyolefin copolymer selected from the group consisting of:

(a) an olefinic polymer having a polyphenylene ether graft-polymerized thereon;

(b) a polyphenylene ether having an olefinic polymer graft-polymerized thereon; and

(c) a block copolymer of a polyphenylene ether and an olefinic polymer; and

(iv) 1 to 400 parts by weight of a polyolefin; and, optionally,

(v) 1 to 1000 parts by weight of an inorganic or organic filler, formulated therein.

In the polyphenylene ether resin composition according to the present invention, the respective components as described above are contained in proportions as specified below per

(i) 100 parts by weight of polyphenylene ether.

(ii) 0 to 400 parts by weight, preferably 0 to 350 parts by weight of an aromatic vinyl polymer (I):

Note, the aromatic vinyl polymer need not be contained in the polyphenylene ether resin composition, but when the aromatic vinyl polymer is formulated in the polyphenylene ether resin composition, the molding processability of the resin composition is improved. If the amount of the aromatic vinyl polymer exceeds 400 parts by weight per 100 parts by weight of polyphenylene ether, heat resistance, mechanical strength, and the like of the polyphenylene ether type resin composition obtained will be undesirably lowered.

(iii) 1 to 400 parts by weight, preferably 5 to 380 parts by weight of a polyphenylene ether-polyolefin copolymer:

Note, by formulating a polyphenylene ether-polyolefin copolymer into a polyphenylene ether resin composition, the compatibility between the polyphenylene ether and the polyolefin is improved as described above, whereby a polyphenylene ether resin composition comprising a polyphenylene ether and a polyolefin uniformly mixed together can be obtained.

An amount of the polyphenylene ether-polyolefin copolymer of less than 1 part by weight per 100 parts by weight of polyphenylene ether, is not desirable because the compatibility between the polyphenylene ether and the polyolefin is not substantially improved, and an amount exceeding 400 parts by weight is not desirable because a good heat resistance can not be obtained thereby.

(iv) 1 to 400 parts by weight, preferably 5 to 380 parts by weight of a polyolefin:

Note, by formulating a polyolefin into the polyphenylene ether type resin composition, the solvent crack resistance of the resin composition is improved, simultaneously with an improvement of the moldability, but the polyphenylene ether resin composition can still be obtained at a low cost.

If the amount of the polyolefin is less than 1 part by weight per 100 parts by weight of polyphenylene ether, solvent crack resistance of the polyphenylene ether resin composition is not be greatly improved, and an amount in excess of 400 parts by weight is not desirable because a good heat resistance can not be obtained thereby.

(v) 1 to 1000 parts by weight, preferably 5 - 800 parts by weight of inorganic filler or organic filler:

Note, the inorganic filler or organic filler may be formulated into the polyphenylene ether resin composition for various purposes, and used in an amount corresponding to a contain purpose, for example, for improving the heat resistance or flame retardancy of the composition or for coloration of the composition.

The polyphenylene ether type composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution or emulsion, followed by removal of the solvent, to prepare the composition.

The polyphenylene ether type resin composition according to the present invention, which contains a polyphenylene etherpolyolefin type copolymer as specified above in addition to polyphenylene ether and polyolefin, has a remarkably improved compatibility between the polyphenylene ether and polyolefin, and thus a polyphenylene ether type resin composition having an improved solvent crack resistance and excellent heat resistance, water resistance, moldability, and impact resistance can be obtained at a low

cost.

In accordance with the present invention, there is also provided a polyphenylene ether resin composition comprising:

(i) 100 parts by weight of a polyphenylene ether;

(ii) 0 to 400 parts by weight of an aromatic vinyl polymer (I);

(iii) 1 to 400 parts by weight of a block copolymer or graft copolymer containing three components: polyphenylene ether, olefinic polymer, and aromatic vinyl polymer; and

(iv) 0 to 400 parts by weight of a polyolefin, and optionally,

(v) 1 to 1000 parts by weight of an inorganic or organic filler.

In the polyphenylene ether resin composition according to the present invention, the respective components as described above are contained in the proportions as specified below per

(i) 100 parts by weight of polyphenylene ether.

(ii) 0 to 400 parts by weight, preferably 0 to 350 parts by weight of an aromatic vinyl polymer (I):

Note, the aromatic vinyl polymer need not be contained in the polyphenylene ether resin composition, but when the aromatic vinyl polymer is formulated in the polyphenylene ether resin composition, the molding processability of the resin composition is improved. If the amount of the aromatic vinyl polymer exceeds 400 parts by weight per 100 parts by weight of polyphenylene ether, the heat resistance, mechanical strength, etc., of the polyphenylene ether resin composition obtained will be undesirably lowered.

(iii) 1 to 400 parts by weight, preferably 5 to 380 parts by weight of a block copolymer or graft copolymer containing three components, polyphenylene ether, olefinic copolymer, and aromatic vinyl polymer:

Note, by formulating the block copolymer or graft copolymer as described above into a polyphenylene ether resin composition, the compatibility between the polyphenylene ether and the polyolefin is improved, as described above, and thus a polyphenylene ether resin composition comprising a polyphenylene ether and a polyolefin uniformly mixed together is obtained.

An amount of the above block copolymer or graft copolymer of less than 1 part by weight per 100 parts by weight of polyphenylene ether is not desirable because the compatibility between the polyphenylene ether and the polyolefin is not substantially be improved, and an amount exceeding 400 parts by weight is not desirable because a good heat resistance can not be obtained thereby.

(iv) 0 to 400 parts by weight, preferably, 5 to 380 parts by weight, of polyolefin:

Note, by formulating a polyolefin into the polyphenylene ether type resin composition, the solvent crack resistance of the resin composition is improved, simultaneously with an improvement of the moldability, and yet a polyphenylene ether resin composition can be obtained at a low cost. If the amount of the polyolefin is less than 1 part by weight per 100 parts by weight of polyphenylene ether, the solvent crack resistance of the polyphenylene ether type resin composition is not greatly improved and an amount in excess of 400 parts by weight is not desirable because a good heat resistance can not be obtained thereby.

(v) 1 to 100 parts by weight, preferably 5 to 800 parts by weight, of inorganic filler or organic filler:

Note, the inorganic filler or organic filler may be formulated into the polyphenylene ether type resin composition for various purposes, and used in an amount corresponding to a certain purpose, for example, for improving the heat resistance or flame retardancy of the composition or for coloration of the composition.

The polyphenylene ether type composition containing the respective components as described above can be prepared by melting and mixing the respective components by various kneading machines, such as a monoaxial extruder, a biaxial extruder, a Banbury mixer, rolls, a Brabender plastogram, etc., and subsequently cooling the kneaded product. In some cases, the respective components can be mixed in a solution or emulsion, followed by removal of the solvent, to prepare the composition.

The polyphenylene ether type resin composition according to the present invention, which contains a block copolymer or graft copolymer containing the three components, polyphenylene ether, olefinic polymer, and aromatic vinyl polymer having an compatibility with the polyphenylene ether in addition to the polyphenylene ether, has a remarkably improved solvent resistance and an excellent impact resistance, heat resistance, water resistance, moldability, and electrical characteristics. Further, when a polyolefin is contained, as a polyphenylene ether type resin composition having an improved compatibility between or uniform dispersibility of the polyphenylene ether and polyolefin can be obtained, a polyphenylene ether type resin in which the above characteristics are further improved can be obtained at a low cost.

In accordance with the present invention, there is further provided a polyphenylene ether type resin composition comprising:

(i) 100 parts by weight of a polyphenylene ether;

(ii) 0 to 400 parts by weight of an aromatic vinyl polymer (I);

(iii) 1 to 500 parts by weight of a polyamide;

(iv) 1 to 400 parts by weight of a block copolymer or graft copolymer containing at least two components from polyphenylene ether, olefinic polymer, and aromatic vinyl polymer; and

(v) 0 to 400 parts by weight of a polyolefin; and optionally,

(vi) 1 to 1000 parts by weight of an inorganic filler or an organic filler.

In the polyphenylene ether resin composition according to the present invention, the respective components as described above are contained in proportions as specified below per

(i) 100 parts by weight of polyphenylene ether.

(ii) 0 to 400 parts by weight, preferably 0 to 350 parts by weight of an aromatic vinyl polymer (I):

Note, the aromatic vinyl polymer need not be contained in the polyphenylene ether resin composition, but when the aromatic vinyl polymer is formulated in the polyphenylene ether resin composition, the molding processability of the resin composition is improved. If the amount of the aromatic vinyl polymer exceeds 400 parts by weight per 100 parts by weight of polyphenylene ether, the heat resistance, mechanical strength, etc., of the polyphenylene ether resin composition obtained will be undesirably lowered.

(iii) 1 to 500 parts by weight, preferably 10 to 350 parts by weight of polyamide:

Note, by formulating a polyamide into the polyphenylene ether type resin composition in an amount of 1 part by weight or more based on 100 parts by weight of polyphenylene ether, the heat resistance, impact resistance or moldability of the composition are improved, but if formulated in an amount exceeding 500 parts by weight, the water resistance in particular of the composition will be undesirably lowered.

(iv) 1 to 400 parts by weight, preferably 5 to 380 parts by weight of a block copolymer or graft copolymer containing the three components, polyphenylene ether, olefinic copolymer, and aromatic vinyl polymer:

Note, by formulating the block copolymer or graft copolymer as described above into a polyphenylene ether type resin composition, the compatibility between the polyphenylene ether and the polyolefin is improved as described above, and thus a polyphenylene ether resin composition comprising polyphenylene ether and polyamide uniformly mixed together is obtained. An amount of the above block copolymer or graft copolymer of less than 1 part by weight based on 100 parts by weight of polyphenylene ether is not desirable because the compatibility of polyphenylene ether with polyolefin is not substantially improved, and an amount exceeding 400 parts by weight is not desirable because a good heat resistance can not be obtained thereby.

(v) 1 to 400 parts by weight, preferably 5 to 380 parts by weight of a polyolefin:

Note, by formulating a polyolefin into the polyphenylene ether resin composition, the solvent crack resistance of the resin composition can be improved, simultaneously with an improvement of the moldability, and a polyphenylene ether resin composition can be obtained at a low cost.

If the amount of the polyolefin is less than 1 part by weight per 100 parts by weight of polyphenylene ether, the solvent crack resistance of the polyphenylene ether resin composition cannot be greatly improved, and an amount in excess of 400 parts by weight is not desirable because a good heat resistance can not be obtained thereby.

(vi) 1 to 1000 parts by weight, preferably 5 to 800 parts by weight, of inorganic filler or organic filler:

Note, the inorganic filler or organic filler may be formulated into the polyphenylene ether resin composition for various purposes, and used in an amount corresponding to a certain purpose, for example, for improving the heat resistance or flame retardancy of the composition or for coloration of the composition.

The polyphenylene ether composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution or emulsion, followed by removal of the solvent, to prepare the composition.

The polyphenylene ether resin composition according to the present invention, which contains a block copolymer or graft copolymer, or both thereof, containing at least two components from polyphenylene ether, olefinic polymer and aromatic vinyl polymer having an excellent compatibility with the polyphenylene ether in addition to polyphenylene ether and polyamide, has a remarkably improved compatibility between the polyphenylene ether and polyamide, thus improving the solvent crack resistance of the polyphenylene ether resin composition, and an excellent heat resistance, water resistance, moldability, and abrasion resistance. Further, when a polyolefin is contained in addition to the above components, as a polyphenylene ether resin composition having an improved compatibility between or uniform dispersibility of polyphenylene ether, polyamide, and polyolefin is obtained, a polyphenylene ether resin in which the above properties are further improved can be obtained at a low cost.

In accordance with the present invention, there is further provided a polyphenylene ether resin composition comprising:

(i) 100 parts by weight of a polyphenylene ether;

(ii) 0 to 400 parts by weight of an aromatic vinyl polymer (I);

(iii) 1 to 500 parts by weight of a polyamide;

(iv) 1 to 400 parts by weight of a modified olefinic polymer; and

(v) 0 to 400 parts by weight of a polyolefin; and optionally,

(vi) 1 to 1000 parts by weight of an inorganic filler or an organic filler.

In the polyphenylene ether resin composition according to the present invention, the respective components as described above are contained in proportions as specified below per

(i) 100 parts by weight of polyphenylene ether.

(ii) 0 to 400 parts by weight, preferably 0 to 350 parts by weight of an aromatic vinyl polymer (I):

Note, the aromatic vinyl polymer need not be contained in the polyphenylene ether resin composition, but when the aromatic vinyl polymer is formulated in the polyphenylene ether type resin composition, the molding processability of the resin composition is improved. If the amount of the aromatic vinyl polymer exceeds 400 parts by weight per 100 parts by weight of polyphenylene ether, the heat resistance, mechanical strength, etc., of the polyphenylene ether resin composition obtained will be undesirably lowered.

(iii) 1 to 500 parts by weight, preferably 10 to 350 parts by weight of polyamide:

Note, by formulating a polyamide into the polyphenylene ether resin composition in an amount of 1 part by weight or more based on 100 parts by weight of polyphenylene ether, the heat resistance, impact resistance, or moldability of the composition is improved, but if formulated in an amount exceeding 500 parts by weight, the water resistance in particular of the composition will be undesirably lowered.

(iv) 1 to 400 parts by weight, preferably 5 to 380 parts by weight of a modified olefinic polymer:

Note, by formulating the modified olefinic polymer as described above into a polyphenylene ether resin composition, the compatibility between the polyphenylene ether and the polyolefin is improved as described above, whereby a polyphenylene ether resin composition comprising polyphenylene ether and polyamide uniformly mixed together is obtained. An amount of the above modified olefinic polymer of less than 1 part by weight based on 100 parts by weight of polyphenylene ether is not desirable because the compatibility between the polyphenylene ether and the polyolefin is not substantially improved, and an amount exceeding 400 parts by weight is not desirable because a good heat resistance can not be obtained thereby.

(v) 1 to 400 parts by weight, preferably 5 to 380 parts by weight, of polyolefin:

Note, by formulating a polyolefin into the polyphenylene ether type resin composition, the solvent crack resistance of the resin composition is improved, simultaneously with an improvement of the moldability, and a polyphenylene ether type resin composition can be obtained at a low cost.

If the amount of the polyolefin is less than 1 part by weight per 100 parts by weight of polyphenylene ether, the solvent crack resistance of the polyphenylene ether resin composition cannot be greatly improved and an amount in excess of 400 parts by weight is not desirable because a good heat resistance can not be obtained thereby.

(vi) 1 to 1000 parts by weight, preferably 5 to 800 parts by weight, of inorganic filler or organic filler:

Note, the inorganic filler or organic filler may be formulated into the polyphenylene ether resin composition for various purposes, and used in an amount corresponding to a certain purpose, for example, for improving the heat resistance or flame retardancy of the composition or for coloration of the composition.

The polyphenylene ether composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution or emulsion, followed by removal of the solvent, to prepare the composition.

The polyphenylene ether resin composition according to the present invention, which contains a modified olefinic polymer having an excellent compatibility with the polyphenylene ether in addition to polyphenylene ether and polyamide, has a remarkably improved compatibility between the polyphenylene ether and polyamide, and thus an improved solvent crack resistance and abrasion resistance, and an excellent heat resistance, water resistance, moldability and impact resistance. Further, when a polyolefin is contained in addition to the above components, since a polyphenylene ether resin composition having an

improved compatibility between or uniform dispersibility of the polyphenylene ether, polyamide and polyolefin can be obtained, a polyphenylene ether resin in which the above properties are further improved can be obtained at a low cost.

In accordance with the present invention, there is further provided a polyphenylene ether resin composition comprising:

(i) 100 parts by weight of a polyphenylene ether;

(ii) 0 to 400 parts by weight of an aromatic vinyl polymer (I);

(iii) 1 to 500 parts by weight of a polyester;

(iv) 1 to 400 parts by weight of a block copolymer or graft copolymer containing at least two components of polyphenylene ether, olefinic polymer and polyester; and

(v) 0 to 400 parts by weight of a polyolefin; and optionally,

(vi) 1 to 1000 parts by weight of an inorganic filler or an organic filler.

In the polyphenylene ether resin composition according to the present invention, the respective components as described above are contained in proportions as specified below per

(i) 100 parts by weight of polyphenylene ether.

(ii) 0 to 400 parts by weight, preferably 0 to 350 parts by weight of an aromatic vinyl polymer (I):

Note, the aromatic vinyl polymer need not be contained in the polyphenylene ether resin composition, but when the aromatic vinyl polymer is formulated in the polyphenylene ether type resin composition, the molding processability of the resin composition is improved. If the amount of the aromatic vinyl polymer exceeds 400 parts by weight per 100 parts by weight of polyphenylene ether, the heat resistance, mechanical strength, etc., of the polyphenylene ether resin composition obtained will be undesirably lowered.

(iii) 1 to 500 parts by weight, preferably 10 to 350 parts by weight of polyester:

Note, by formulating a polyester into the polyphenylene ether resin composition in an amount of 1 part by weight or more based on 100 parts by weight of polyphenylene ether, the heat resistance, impact resistance, or moldability of the composition are improved, but if formulated in an amount exceeding 500 parts by weight, the water resistance in particular of the composition will be undesirably lowered.

(iv) 1 to 400 parts by weight, preferably 5 to 380 parts by weight of a block copolymer or graft copolymer containing the three components of polyphenylene ether, olefinic copolymer and aromatic vinyl polymer:

Note, by formulating the block copolymer or graft copolymer as described above into a polyphenylene ether resin composition, the compatibility between the polyphenylene ether and the polyolefin is improved as described above, whereby a polyphenylene ether resin composition comprising polyphenylene ether and polyamide uniformly mixed together is obtained. An amount of the above block copolymer or graft copolymer of less than 1 part by weight based on 100 parts by weight of polyphenylene ether is not desirable because the compatibility between the polyphenylene ether and the polyolefin is not substantially improved, and an amount exceeding 400 parts by weight is not desirable because a good heat resistance can not be obtained thereof.

(v) 1 to 400 parts by weight, preferably 5 to 380 parts by weight of a polyolefin:

Note, by formulating a polyolefin into the polyphenylene ether resin composition, the solvent crack resistance of the resin composition is improved, simultaneously with an improvement of the moldability, and a polyphenylene ether type resin composition can be obtained at a low cost.

If the amount of the polyolefin is less than 1 part by weight per 100 parts by weight of polyphenylene ether, the solvent crack resistance of the polyphenylene ether resin composition cannot be greatly improved, and an amount in excess of 400 parts by weight is not desirable because a good heat resistance can not be obtained thereby.

(vi) 1 to 1000 parts by weight, preferably 5 to 800 parts by weight, of inorganic filler or organic filler:

Note, the inorganic filler or organic filler may be formulated into the polyphenylene ether resin composition for various purposes, and used in an amount corresponding to a certain purpose, for example, for improving the heat resistance or flame retardancy of the composition or for coloration of the composition.

The polyphenylene ether composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution or emulsion, followed by removal of the solvent, to prepare the composition.

The polyphenylene ether resin composition according to the present invention, which contains a block copolymer or graft copolymer, or both thereof, containing at least two components from polyphenylene

ether, olefinic polymer, and polyester having an excellent compatibility with the polyphenylene ether in addition to polyphenylene ether and polyester, has a remarkably improved solvent crack resistance and an excellent impact resistance, heat resistance, water resistance, moldability, and electrical characteristics. Further, when a polyolefin is contained in addition to the above components, since a polyphenylene ether resin composition having an improved compatibility between or uniform dispersibility of the polyphenylene ether, polyester and polyolefin can be obtained, a polyphenylene ether resin in which the above properties are further improved can be obtained at a low cost.

In accordance with the present invention, there is further provided a polyphenylene ether resin composition comprising:

(i) 100 parts by weight of a polyphenylene ether;

(ii) 0 to 400 parts by weight of an aromatic vinyl polymer (I);

(iii) 1 to 500 parts by weight of a polyester;

(iv) 1 to 400 parts by weight of a modified olefinic polymer; and

(v) 0 to 400 parts by weight of a polyolefin; and optionally,

(vi) 1 to 1000 parts by weight of an inorganic filler or an organic filler.

In the polyphenylene ether resin composition according to the present invention, the respective components as described above are contained in proportions as specified below per

(i) 100 parts by weight of polyphenylene ether.

(ii) 0 to 400 parts by weight, preferably 0 to 350 parts by weight of an aromatic vinyl polymer (I):

Note, the aromatic vinyl polymer need not be contained in the polyphenylene ether resin composition, but when the aromatic vinyl polymer is formulated in the polyphenylene ether type resin composition, the molding processability of the resin composition is improved. If the amount of the aromatic vinyl polymer exceeds 400 parts by weight per 100 parts by weight of polyphenylene ether, the heat resistance, mechanical strength, etc., of the polyphenylene ether resin composition obtained will be undesirably lowered.

(iii) 1 to 500 parts by weight, preferably 10 to 350 parts by weight of polyester:

Note, by formulating a polyamide into the polyphenylene ether resin composition in an amount of 1 part by weight or more based on 100 parts by weight of polyphenylene ether, the impact resistance or moldability of the composition is improved, but if formulated in an amount exceeding 500 parts by weight, the water resistance in particular of the composition will be undesirably lowered.

(iv) 1 to 400 parts by weight, preferably 5 to 380 parts by weight of a modified olefinic polymer:

Note, by formulating the modified olefinic polymer as described above into a polyphenylene ether resin composition, the compatibility between the polyphenylene ether and the polyolefin is improved as described above, whereby a polyphenylene ether type resin composition comprising a polyphenylene ether and polyamide uniformly mixed together is obtained. An amount of the above modified olefinic polymer of less than 1 part by weight based on 100 parts by weight of polyphenylene ether is not desirable because the compatibility between the polyphenylene ether and the polyolefin is not substantially improved, and an amount exceeding 400 parts by weight is not desirable because a good heat resistance can not be obtained thereby.

(v) 1 to 400 parts by weight, preferably 5 to 380 parts by weight, of polyolefin:

Note, by formulating a polyolefin into the polyphenylene ether resin composition, the solvent crack resistance of the resin composition is improved, simultaneously with an improvement of the moldability, and a polyphenylene ether resin composition can be obtained at a low cost.

If the amount of the polyolefin is less than 1 part by weight per 100 parts by weight of polyphenylene ether, the solvent crack resistance of the polyphenylene ether resin composition cannot be greatly improved and an amount in excess of 400 parts by weight is not desirable because a good heat resistance can not be obtained thereby.

(vi) 1 to 1000 parts by weight, preferably 5 to 800 parts by weight, of inorganic filler or organic filler:

Note, the inorganic filler or organic filler may be formulated into the polyphenylene ether resin composition for various purposes, and used in an amount corresponding to a certain purpose, for example, for improving the heat resistance or flame retardancy of the composition or for coloration of the composition.

The polyphenylene ether composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution or emulsion, followed by removal of the solvent, to prepare the composition.

The polyphenylene ether resin composition according to the present invention, which contains a

modified olefinic polymer having an excellent compatibility with the polyphenylene ether in addition to polyphenylene ether and polyester, has a remarkably improved compatibility between the polyphenylene ether and the polyamide, and thus an improved solvent crack resistance and abrasion resistance, and an excellent impact resistance, heat resistance, water resistance, moldability, and electrical characteristics. Further, when a polyolefin is contained in addition to the above components, since a polyphenylene ether resin composition having an improved compatibility between or uniform dispersibility of the polyphenylene ether, polyester and polyolefin is obtained, a polyphenylene ether resin in which the above properties are further improved can be obtained at a low cost.

In accordance with the present invention, there is further provided a polyphenylene ether resin composition comprising:

(i) 100 parts by weight of a polyphenylene ether;

(ii) 0 to 400 parts by weight of a first aromatic vinyl polymer (I);

(iii) 0.1 to 400 parts by weight of a second aromatic vinyl polymer (II) which is a copolymer of (a) an aromatic vinyl monomer and (b) a monomer having a cyclic structure in which at least one carbon-carbon bond forming the cyclic structure is a double bond other than an aromatic double bond, having a glass transition temperature Tg of 100 to 200 °C, or its hydrogenated product; and optionally,

(iv) 1 to 400 parts by weight of a polyolefin; and further optionally,

(v) 1 to 400 parts by weight of a modified olefinic polymer.

In the polyphenylene ether resin composition according to the present invention, the respective components as described above are contained in proportions as specified below per

(i) 100 parts by weight of polyphenylene ether.

(ii) 0 to 400 parts by weight, preferably 0 to 350 parts by weight of an aromatic vinyl polymer (I):

Note, the aromatic vinyl polymer (I) need not be contained in the polyphenylene ether resin composition, but when the aromatic vinyl polymer (I) is formulated in the polyphenylene ether type resin composition, the molding processability of the resin composition is improved. If the amount of the aromatic vinyl polymer (I) exceeds 400 parts by weight per 100 parts by weight of polyphenylene ether, the heat resistance, mechanical strength, etc., of the polyphenylene ether resin composition obtained will be undesirably lowered.

(iii) 0.1 to 400 parts by weight, preferably 5 to 300 parts by weight of the second aromatic vinyl polymer (II) or its hydrogenated product:

If the amount of the second aromatic vinyl polymer (II) is less than 0.1 part by weight based on 100 parts by weight of polyphenylene ether, the solvent crack resistance will be undesirably lowered, but if the second aromatic vinyl polymer (II) exceeds 400 parts by weight based on 100 parts of polyphenylene ether, the heat resistance is undesirably lowered.

In the second and third polyphenylene ether resin compositions according to the present invention, (iv) the polyolefin or (v) the modified polyolefin is formulated in an amount described below.

(iv) 1 to 400 parts by weight, preferably 5 to 380 parts by weight, of polyolefin:

Note, by formulating a polyolefin into the polyphenylene ether resin composition, the solvent crack resistance of the resin composition is improved, simultaneously with an improvement of the moldability, and a polyphenylene ether type resin composition can be obtained at a low cost.

If the amount of the polyolefin is less than 1 part by weight per 100 parts by weight of polyphenylene ether, the solvent crack resistance of the polyphenylene ether resin composition is not greatly improved, and an amount in excess of 400 parts by weight is not desirable because a good heat resistance can not be obtained thereby.

(v) 1 to 400 parts by weight, preferably 5 to 380 parts by weight of a modified olefinic polymer:

An amount of the above modified olefinic polymer of less than 1 part by weight based on 100 parts by weight of polyphenylene ether is not desirable because the compatibility between the polyphenylene ether and the polyolefin is not substantially improved, and an amount exceeding 400 parts by weight is not desirable because a good heat resistance can not be obtained thereby.

Also, in the polyphenylene ether resin composition according to the present invention, in addition to the respective components as described above, an inorganic filler or an organic filler as described below may be contained, if necessary.

These inorganic fillers or organic fillers may be formulated in proportions generally of 1 to 1000 parts by weight, preferably 5 to 800 parts by weight, based on 100 parts by weight of the polyphenylene ether.

The polyphenylene ether composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution

or emulsion, followed by removal of the solvent, to prepare the composition.

The polyphenylene ether type resin composition according to the present invention contains an aromatic vinyl polymer having an excellent compatibility with the polyphenylene ether in addition to the polyphenylene ether. The aromatic vinyl copolymer has an excellent compatibility between or uniform dispersibility of the polyphenylene ether, and the polyphenylene ether type resin composition obtained has an improved solvent crack resistance, and an improved impact resistance, heat resistance, water resistance, and mechanical strength, and further improves the compatibility between or uniform dispersibility of the polyphenylene ether and polyphenylene ether when a polyolefin is formulated. As a result, the composition obtained has an excellent compatibility or uniform dispersibility, excellent solvent crack resistance, and excellent impact resistance, heat resistance, water resistance, and moldability, and a low cost.

In accordance with the present invention, there is further provided a polyphenylene ether resin composition comprising:

(i) 100 parts by weight of a polyphenylene ether;

(ii) 0 to 400 parts by weight of an aromatic vinyl polymer (I);

(iii) 1 to 400 parts by weight of an olefinic polymer having oxazoline ring;

(iv) 0 to 400 parts by weight of a polyolefin; and optionally

(v) 1 to 1000 parts by weight of an inorganic or organic filler.

In the polyphenylene ether resin composition according to the present invention, the respective components as described above are contained in the proportions as specified below per

(i) 100 parts by weight of polyphenylene ether.

(ii) 0 to 400 parts by weight, preferably 0 to 350 parts by weight of an aromatic vinyl polymer:

Note, the aromatic vinyl polymer need not be contained in the polyphenylene ether resin composition, but when the aromatic vinyl polymer is formulated in the polyphenylene ether type resin composition, the molding processability of the resin composition is improved.

If the amount of the aromatic vinyl polymer exceeds 400 parts by weight per 100 parts by weight of polyphenylene ether, the heat resistance, mechanical strength, etc., of the polyphenylene ether resin composition obtained will be undesirably lowered.

(iii) 1 to 400 parts by weight, preferably 5 to 380 parts by weight of olefinic polymer having oxazoline ring:

Note, by formulating a polyolefin having an oxazoline ring into the polyphenylene ether resin composition, the compatibility between the polyphenylene ether and the polyolefin is improved, whereby a polyphenylene ether resin composition comprising polyphenylene ether and polyolefin uniformly mixed together is obtained.

If the amount of the olefinic polymer having oxazoline ring or the grafted copolymer is less than 1 part by weight based on 100 parts by weight of polyphenylene ether, the compatibility of polyphenylene ether with polyolefin will not be substantially improved, and an amount exceeding 400 parts by weight is not preferable because a good heat resistance can not be obtained thereby.

(iv) 1 to 400 parts by weight, preferably 5 to 380 parts by weight, of polyolefin:

Note, by formulating a polyolefin into the polyphenylene ether type resin composition, the solvent crack resistance of the resin composition is improved, simultaneously with an improvement of the moldability, and a polyphenylene ether type resin composition can be obtained at a low cost.

If the amount of the polyolefin is less than 1 part by weight per 100 parts by weight of polyphenylene ether, the solvent crack resistance of the polyphenylene ether resin composition is not greatly improved, and an amount in excess of 400 parts by weight is not desirable because a good heat resistance can not be obtained thereby.

(v) 1 to 1000 parts by weight, preferably 5 to 800 parts by weight, of inorganic filler or organic filler:

Note, the inorganic filler or organic filler may be formulated into the polyphenylene ether type resin composition for various purposes, and used in an amount corresponding to a certain purpose, for example, for improving the heat resistance or flame retardancy of the composition or for coloration of the composition.

The polyphenylene ether type composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution or emulsion, followed by removal of the solvent, to prepare the composition.

The polyphenylene ether type resin composition according to the present invention, which contains an olefinic polymer having an oxazoline ring, as mentioned above, in addition to the polyphenylene ether and polyolefin, has a remarkably improved compatibility between the polyphenylene ether and polyolefin, and

thus an improved in solvent crack resistance, and an excellent heat resistance, water resistance, moldability, and impact resistance, and a polyphenylene ether type resin composition can be obtained at a low cost.

In accordance with the present invention, there is further provided a polyphenylene ether resin composition comprising:

(i) 100 parts by weight of a polyphenylene ether;
(ii) 0 to 400 parts by weight of an aromatic vinyl polymer;
(iii) 1 to 400 parts by weight of a cyclic olefinic copolymer; and
(iv) 0 to 400 parts by weight of a polyolefin; and optionally,
(v) 1 to 1000 parts by weight of an inorganic filler or an organic filler.

In the polyphenylene ether resin composition according to the present invention, the respective components as described above are contained in proportions as specified below per

(i) 100 parts by weight of polyphenylene ether.

(ii) 0 to 400 parts by weight, preferably 0 to 350 parts by weight of an aromatic vinyl polymer:

Note, the aromatic vinyl polymer need not be contained in the polyphenylene ether type resin composition, but when the aromatic vinyl polymer is formulated in the polyphenylene ether type resin composition, the molding processability of the resin composition is improved.

If the amount of the aromatic vinyl polymer exceeds 400 parts by weight per 100 parts by weight of polyphenylene ether, the heat resistance, mechanical strength, etc., of the polyphenylene ether type resin composition obtained will be undesirably lowered.

(iii) 1 to 400 parts by weight, preferably 5 to 380 parts by weight of cyclic olefinic copolymer:

Note, by formulating a cyclic olefinic copolymer into the polyphenylene ether resin composition, the compatibility between the polyphenylene ether and the polyolefin is improved, as described above, whereby a polyphenylene ether resin composition comprising polyphenylene ether and polyolefin uniformly mixed together is obtained. An amount of the cyclic olefinic copolymer of less than 1 part by weight based on 100 parts by weight of polyphenylene ether is not preferable because the compatibility between the polyphenylene ether and polyolefin is not substantially improved, and an amount in excess of 400 parts by weight is not preferable because a good heat resistance can not be obtained thereby.

(iv) 1 to 400 parts by weight, preferably 5 to 380 parts by weight, of polyolefin:

Note, by formulating a polyolefin into the polyphenylene ether type resin composition, the solvent crack resistance of the resin composition is improved, simultaneously with an improvement of the moldability, and a polyphenylene ether resin composition can be obtained at a low cost.

If the amount of the polyolefin is less than 1 part by weight per 100 parts by weight of polyphenylene ether, the solvent crack resistance of the polyphenylene ether resin composition is not greatly improved, and an amount in excess of 400 parts by weight is not desirable because a good heat resistance can not be obtained thereby.

(v) 1 to 1000 parts by weight, preferably 5 to 800 parts by weight, of inorganic filler or organic filler:

Note, the inorganic filler or organic filler may be formulated into the polyphenylene ether resin composition for various purposes, and used in an amount corresponding to a certain purpose, for example, for improving the heat resistance or flame retardancy of the composition or for coloration of the composition.

The polyphenylene ether composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution or emulsion, followed by removal of the solvent, to prepare the composition.

The polyphenylene ether resin composition according to the present invention, which contains a cyclic olefinic copolymer has an excellent compatibility between the polyphenylene ether in addition to the polyphenylene ether, has an improved solvent crack resistance and an excellent impact resistance, heat resistance, water resistance, and moldability. Further, when a polyolefin is contained in addition to the above components, since a polyphenylene ether resin composition having an improved compatibility between or uniform dispersibility of the polyphenylene ether and polyolefin can be obtained, a polyphenylene ether resin in which the above properties are further improved can be obtained at a low cost.

In accordance with the present invention, there is further provided a polyphenylene ether resin composition comprising:

(i) 100 parts by weight of a polyphenylene ether;
(ii) 0 to 400 parts by weight of an aromatic vinyl polymer;
(iii) 0.1 to 400 parts by weight of an epoxy resin;

(iv) 0.1 to 400 parts by weight of a modified olefinic polymer containing an unsaturated carboxylic acid or its derivative; and

(v) 0 to 400 parts by weight of a polyolefin; and, optionally,

(vi) an inorganic filler or an organic filler.

In the polyphenylene ether resin composition according to the present invention, the respective components as described above are contained in proportions as specified below per

(i) 100 parts by weight of polyphenylene ether:

(ii) 0 to 400 parts by weight, preferably 0 to 350 parts by weight of an aromatic vinyl polymer:

Note, the aromatic vinyl polymer need not be contained in the polyphenylene ether resin composition, but when the aromatic vinyl polymer is formulated in the polyphenylene ether resin composition, the molding processability of the resin composition is improved.

If the amount of the aromatic vinyl polymer exceeds 400 parts by weight per 100 parts by weight of polyphenylene ether, the heat resistance, mechanical strength, etc., of the polyphenylene ether type resin composition obtained will be undesirably lowered

(iii) 0.1 to 400 parts by weight, preferably 1 to 350 parts by weight of epoxy resin:

Note, by formulating an epoxy resin into the polyphenylene ether type resin composition in an amount of 0.1 part by weight or more based on 100 parts by weight of polyphenylene ether, the solvent crack resistance, heat resistance, impact resistance or moldability of the composition are improved, but if formulated in an amount exceeding 400 parts by weight, the water resistance in particular of the composition will be undesirably lowered.

(iv) 0.1 to 400 parts by weight, preferably 1 to 350 parts by weight of a modified olefinic polymer:

The resin composition obtained by formulating an epoxy resin and a modified olefinic polymer in polyphenylene ether has an excellent compatibility or uniform dispersibility, and further, the resin composition obtained by formulating an epoxy resin, a modified olefinic polymer and a polyolefin in polyphenylene ether has an improved compatibility between or uniform dispersibility of the polyphenylene ether and polyolefin to give a polyphenylene ether resin composition comprising polyphenylene ether, epoxy resin and polyolefin uniformly mixed together. An amount of the above modified olefinic polymer of less than 0.1 part by weight based on 100 parts by weight of polyphenylene ether is not desirably because the compatibility of polyphenylene ether with polyolefin is not substantially improved, and an amount exceeding 400 parts by weight is not desirable because the heat resistance and mechanical strength will be lowered.

(v) 0 to 400 parts by weight, preferably 5 to 380 parts by weight, of polyolefin:

Note, by formulating a polyolefin into the polyphenylene ether resin composition, the solvent crack resistance of the resin composition is improved, simultaneously with an improvement of the moldability, and a polyphenylene ether type resin composition can be obtained at a low cost.

An amount of the polyolefin in excess of 400 parts by weight per 100 parts by weight of polyphenylene ether is not desirable because a good heat resistance can not be obtained thereby.

(iv) 1 to 1000 parts by weight, preferably 5 to 800 parts by weight, of inorganic filler or organic filler:

Note, the inorganic filler or organic filler may be formulated into the polyphenylene ether type resin composition for various purposes, and used in an amount corresponding to a certain purpose, for example, for improving the heat resistance or flame retardancy of the composition or for coloration of the composition.

The polyphenylene ether composition containing the respective components as described above can be prepared by melting and mixing the respective components by various kneading machines, such as a monoaxial extruder, a biaxial extruder, a Banbury mixer, rolls, and a Brabender plastogram, and subsequently cooling the kneaded product. In some cases, the respective components can be mixed in a solution or emulsion, followed by removal of the solvent, to prepare the composition.

The polyphenylene ether resin composition according to the present invention, which contains an epoxy resin and a modified olefinic polymer containing an unsaturated carboxylic acid or its derivative component having an excellent compatibility with the polyphenylene ether in addition to polyphenylene ether, has an improved solvent crack resistance and an excellent impact resistance, heat resistance, water resistance, moldability, and electrical characteristics. Further, when a polyolefin is contained in addition to the above components, a polyphenylene ether resin composition in which the above properties are further improved can be obtained at a low cost.

In accordance with the present invention, there is further provided a polyphenylene ether resin composition comprising:

(i) 100 parts by weight of a polyphenylene ether;

(ii) 0 to 400 parts by weight of an aromatic vinyl polymer;

(iii) 0.1 to 400 parts by weight of a hydrocarbon resin having a transition temperature lower than 100° C, or its hydrogenated product; and,

optionally,

(iv) 0 to 400 parts by weight of a polyolefin; and, further optionally,

(v) 1 to 400 parts by weight of a modified olefinic polymer.

In the polyphenylene ether resin composition according to the present invention, the respective components as described above are contained in proportions as specified below per

(i) 100 parts by weight of polyphenylene ether:

(ii) 0 to 400 parts by weight, preferably 0 to 350 parts by weight of an aromatic vinyl polymer (I):

Note, the aromatic vinyl polymer (I) need not be contained in the polyphenylene ether resin composition, but when the aromatic vinyl polymer is formulated in the polyphenylene ether type resin composition, the molding processability of the resin composition is improved. If the amount of the aromatic vinyl polymer exceeds 400 parts by weight per 100 parts by weight of polyphenylene ether, the heat resistance, mechanical strength, etc., of the polyphenylene ether resin composition obtained will be undesirably lowered.

(iii) 0.1 to 400 parts by weight, preferably 5 to 300 parts by weight of a hydrocarbon resin or its hydrogenated product:

If the amount of the hydrocarbon resin or its hydrogenated product is less than 0.1 part by weight based on 100 parts by weight of polyphenylene ether, the solvent crack resistance will be undesirably lowered, but if the hydrocarbon resin or its hydrogenated product exceeds 400 parts by weight based on 100 parts of polyphenylene ether, the heat resistance is undesirably lowered.

In the second and third polyphenylene ether type resin compositions according to the present invention, (iv) polyolefin or (v) modified polyolefin is formulated in an amount as described below.

(iv) 0 to 400 parts by weight, preferably 5 to 380 parts by weight, of polyolefin:

Note, byy formulating a polyolefin into the polyphenylene ether resin composition, the solvent crack resistance of the resin composition is improved, simultaneously with an improvement of the moldability, and a polyphenylene ether type resin composition can be obtained at low cost.

If the amount of the polyolefin is less than 1 part by weight per 100 parts by weight of polyphenylene ether, the solvent crack resistance of the polyphenylene ether resin composition is not greatly improved and an amount in excess of 400 parts by weight is not desirable because a good heat resistance can not be obtained thereby.

(v) 1 to 400 parts by weight, preferably 5 to 380 parts by weight of a modified olefinic polymer:

An amount of the above modified olefinic polymer of less than 1 part by weight based on 100 parts by weight of polyphenylene ether is not desirably because the compatibility of polyphenylene ether with polyolefin is not substantially improved, and an amount exceeding 400 parts by weight is not desirable because a good heat resistance can not be obtained thereby.

Also, in the polyphenylene ether resin composition according to the present invention, in addition to the respective components as described above, an inorganic filler or an organic filler as described below may be contained, if necessary.

The polyphenylene ether resin composition according to the present invention contains a hydrocarbon resin or its hydrogenated product having an excellent compatibility with the polyphenylene ether in addition to the polyphenylene ether, and therefore, the polyphenylene ether resin composition obtained has an improved solvent crack resistance and an excellent impact resistance, heat resistance, water resistance, moldability, and electrical characteristics. Further, when a polyolefin is contained, since a polyphenylene ether resin composition having an improved compatibility or uniform dispersibility of polyphenylene ether and polyolefin is obtained, the above properties of the composition are further improved in and the composition is obtained at a low cost.

## DESCRIPTION OF THE PREFERRED EMBODIMENTS

The respective components of the polyphenylene ether resin composition according to the present invention are described in detail below.

(i) Polyphenylene Ether

Polyphenylene ether has a structure represented by the formula I :

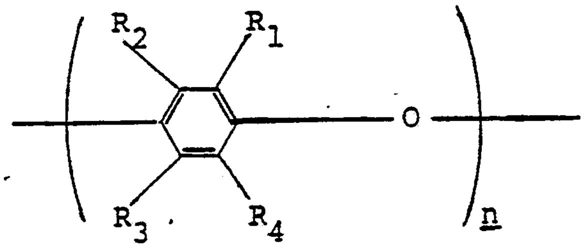

.... [I]

wherein $R_1$ , $R_2$ , $R_3$ and $R_4$ may be either identical or different, and each represent a hydrogen atom, a halogen atom, an alkyl group, an alkoxy group, cyano group, nitro group, amino group, phenoxy group or sulfo group, and n is an integer representing a polymerization degree which is 20 to 1000.

As the polyphenylene ether represented by the above formula [I], the following polymers may be specifically employed. For example, there are poly-2,6-dimethyl-1,4-phenylene ether, poly-2,6-diethyl-1,4-phenylene ether, poly-2,6-dipropyl-1,4-phenylene ether, poly-2-methyl-6-isopropyl-1,4-phenylene ether, poly-2,6-dimethoxy-1,4-phenylene ether, poly-2,6-dichloromethyl-1,4-phenylene ether, poly-2,6-diphenyl-1,4-phenylene ether, poly-2,6-dinitrile-1,4-phenylene ether, poly-2,6-dichloro-1,4-phenylene ether, poly-2,5-dimethyl-1,4-phenylene ether, and the like.

The intrinsic viscosity [$\eta$] of these polyphenylene ethers measured in chloroform at 30°C is 0.01 to 5 dl/g, preferably 0.1 to 3 dl/g.

(ii) Aromatic Vinyl Polymer (I)

The first aromatic vinyl polymer (I) is a polymer or copolymer containing at least 25 mol% of polymer units derived from an aromatic vinyl compound represented by the formula [II]:

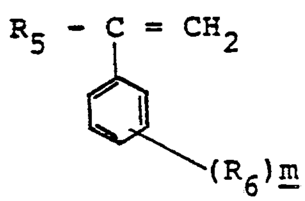

wherein $R_5$ is a hydrogen atom, a lower alkyl group or a halogen atom, $R_6$ is hydrogen atom, a lower alkyl group or vinyl group, and m is an integer of 1 to 5.

Such aromatic vinyl polymers may include, specifically, the following polymers, namely polystyrene, poly-$\alpha$-methylstyrene, polychlorostyrene, rubber-modified polystyrene, styreneacrylonitrile copolymer, styrene-butadiene-acrylonitrile copolymer, styrene-maleic anhydride copolymer, styrene-maleic anhydride-butadiene copolymer and others.

The intrinsic viscosity [$\eta$] of these aromatic vinyl polymers measured in toluene at 30°C is 0.01 to 5 dl/g, preferably 0.1 to 3 dl/g.

(iii) Second Aromatic Vinyl Polymer (II) or its Hydrogenated Product

The second aromatic vinyl polymer (II) to be used in the present invention is a copolymer of (a) an aromatic vinyl monomer and (b) a monomer having a cyclic structure in which at least one carbon-carbon bond forming the cyclic structure is a double bond other than an aromatic double bond.

As the (a) aromatic vinyl monomer, the following monomers may be employed:

Styrene, $\alpha$-methylstyrene, chlorostyrene, o,m,p-isopropenylstyrene, o,m,p-isopropenylphenol, o,m,p-isopropenylaniline, o,m,p-vinyltoluene, o,m,p-vinylphenol, o,m,p-vinylaniline.

As the monomer having a cyclic structure in which at least one carbon-carbon bond forming the cyclic

structure is a double bond other than aromatic double bond, the following monomers may be employed:

unsaturated cyclic acid anhydrides such as maleic anhydride, tetrahydrophthalic acid, endocis-bicyclo-[2,2,1]hepto-5-ene-2,3-dicarboxylic acid, and imidated products of these compounds, indene, coumarone, cyclopentadiene, dicyclopentadiene, tricyclodecene, norbornene, ethylidenenorbornene, acenaphthylene.

In the second aromatic vinyl polymer (II) or its hydrogenated product,

the (a) aromatic vinyl monomer exists in an amount of 1 to 99%, preferably 10 to 90 mol%, particularly preferably 30 to 80 mol%, and the (b) above monomer having cyclic structure exists in an amount of 99 to 1 mol%, preferably 90 to 10 mol%, particularly preferably 70 to 20 mol%.

The number average molecular weight (Mn) of the second aromatic vinyl polymer or its hydrogenated product as measured by gel permeation chromatography (GPC) is in the range of 500 of 100000, preferably 500 to 50000, particularly preferably 600 to 10000, with the molecular weight distribution being in the range of 1.1 to 40, preferably 1.1 to 30, particularly 1.1 to 15. The glass transition temperature (Tg) as measured by differential scanning calorimeter (DSC) is in the range of 100 to 200°C, preferably 105 to 180°C, particularly preferably 110 to 170°C.

Such second aromatic vinyl copolymer (II) can be prepared by cationic polymerization or radical polymerization of (a) an aromatic vinyl monomer and (b) a monomer having cyclic structure. The hydrogenated product can be prepared by hydrogenating a part or all of the aromatic ring by reacting the second aromatic vinyl copolymer with hydrogen under a high pressure in the presence of a catalyst such as Raney nickel.

The second aromatic vinyl polymer (II) or its hydrogenated product is fully compatible with polyphenylene ether, but when the second aromatic vinyl polymer is formulated into polyphenylene ether, compared with when the first aromatic polymer as described above is formulated alone into polyphenylene ether, the heat resistance of the polyphenylene ether type resin composition is improved and the moldability is excellent.

Further, the second aromatic vinyl polymer (II) improves the compatibility between polyphenylene ether and polyolefin when a polyolefin or a modified olefinic polymer is formulated into polyphenylene ether, and therefore, the polyphenylene ether resin composition comprising the second aromatic vinyl polymer or its hydrogenated product and a polyolefin formulated in polyphenylene ether has an excellent solvent crack resistance and an excellent heat resistance, water resistance, moldability, and impact resistance, and can be obtained at a low cost.

(iv) Polyphenylene Ether-Polyolefin Type Copolymer

The polyphenylene ether-polyolefin copolymer to be used in the present invention is selected from the following groups (a) to (c):

(a) an olefinic polymer having a polyphenylene ether graft-polymerized thereon;
(b) a polyphenylene ether having an olefinic polymer graft-polymerized thereon; and
(c) a block copolymer of a polyphenylene ether and an olefinic polymer.

By formulating these polyphenylene ether-polyolefin copolymers into the polyphenylene ether resin composition, the compatibility between the polyphenylene ether and the polyolefin is enhanced, and thus the polyphenylene ether resin composition obtained has an improved solvent crack resistance and an improved impact resistance, heat resistance, water resistance, and mechanical strength.

The (a) olefinic polymer having a polyphenylene ether graft-polymerized thereon has a branched structure comprising (A) a polyphenylene ether graft copolymerized through a functional group or not through a functional group onto (B) an olefinic polymer, with the weight ratio of the component (A)/the component (B) being 5 to 95% by weight of the component (A)/95 to 5% by weight of the component (B), preferably 10 to 90% by weight of the component (A)/90 to 10% by weight of the component (B).

Such an olefinic polymer having a polyphenylene ether grafted thereon can be produced by, for example, graft-polymerizing a glycidylated polyphenylene ether obtained by reacting a polyphenylene ether with epichlorohydrin in the presence of an alkali such as sodium hydroxide onto a polyolefin having carboxylic groups or acid anhydride groups in the main chain or the side chain, such as ethylene-acrylic acid copolymer, ethylene-methacrylic acid copolymer, polyethylene modified with maleic anhydride, polypropylene modified with maleic anhydride, ethylene-propylene copolymer modified with maleic anhydride, ethylene-vinyl acetate copolymer modified with maleic anhydride, in the presence or absence of an alkali component.

Also, the olefinic polymer having a polyphenylene ether graft-polymerized thereon can be produced by having a polyphenylene ether graft-polymerized onto a polyolefin having glycidyl group in the side chain,

such as polyethylene modified with glycidyl methacrylate, polypropylene modified with glycidyl methacrylate, ethylene-propylene copolymer modified with glycidyl methacrylate, ethylene-glycidyl methacrylate copolymer, ethylene-vinyl acetate-glycidyl methacrylate copolymer, etc. This graft reaction may be carried out by using an alkali such as sodium hydroxide, or an amine such as tri-n-butylamine, ordinarily as a solution or in a molten state. At a high temperature of 150 °C or higher, the graft reaction will proceed even without the use of a catalyst as described above, and a polyolefin having a polyphenylene ether graft-polymerized thereon is obtained.

The (b) polyphenylene ether having olefinic polymer graft-polymerized thereon has a branched structure comprising (B) an olefinic polymer graft-copolymerized through a functional group or not through a functional group onto (A) a polyphenylene ether, with the weight ratio of the component (A)/the component (B) being 5 to 95% by weight of the component (A)/95 to 5% by weight of the component (B), preferably 10 to 90% by weight of the component (A)/90 to 10% by weight of the component (B).

Such polyphenylene ether having an olefinic polymer graft-polymerized thereon can be produced as described below. Namely, it can be produced by reacting a polyphenylene ether having an acid anhydride group, epoxy group, carboxyl group or the like in the side chain with an olefinic polymer having a hydroxyl group, carboxyl group, acid anhydride, epoxy group or the like capable of reacting with these functional groups at the terminal end in the presence or absence of a catalyst.

The (c) block copolymer of polyphenylene ether and olefinic polymer is a polymer having a structure with (B) an olefinic polymer block copolymerized through a functional group or not through a functional group at one end or both ends of (A) a polyphenylene ether, or a polymer having a straight chain structure having (A) a polyphenylene ether block copolymerized through a functional group of not through a functional group one end or both ends of (B) an olefinic polymer. The weight ratio of the component (A)/the component (B) of said block copolymer may be 5 to 95% by weight of the component (A)/95 to 5% by weight of the component (B), preferably 10 to 90% by weight of the component (A)/90 to 10% by weight of the component (B).

Such a block copolymer of polyphenylene ether and olefinic polymer can be produced as described below.

For example, the block copolymer can be produced by reacting a polyphenylene ether having an epoxy group at one end with an olefinic polymer having a hydroxyl group, carboxyl group, thiol group, amino group, or the like at one end or both ends in the presence or absence of a catalyst.

The olefinic polymer constituting these polyphenylene ether-polyolefin copolymers (iv) is a noncrystalline, low crystalline or crystalline olefinic polymer comprising an α-olefinic component such as ethylene, propylene, 1-butene, 1-pentene, 4-methyl-1-pentene, 1-hexene, 1-octene, 1-decene, 1-dodecene, 1-tetradecene, 1-hexadecene, 1-octadecene, 1-eicosene and the like. Other than these α-olefinic components, a small amount of a diene component such as butadiene, isoprene, 1,4-hexadiene, 5-ethylidene-2-norbornene, 5-vinyl-2-norbornene, vinyl acetate or an unsaturated carboxylic acid or its derivative component such as acrylic acid (salt), methacrylic acid (salt), acrylate, methacrylate, maleic acid, maleic anhydride, maleate, 2-norbornene-5,6-dicarboxylic acid, 2-norbornene-5,6-dicarboxylic anhydride may be also randomly copolymerized or graft-copolymerized.

Among these olefinic polymers, specific examples of noncrystalline or low crystalline olefinic polymers may include ethylene-propylene copolymer, ethylene-1-butene copolymer, ethylene-1-hexene copolymer, propylene-1-butene copolymer, propylene-1-butene-4-methyl-1-pentene copolymer, 1-hexene-4-methyl-1-pentene copolymer, ethylene-propylene-dicyclopentadiene copolymer, ethylene-propylene-5-ethylidene-2-norbornene copolymer, ethylene-propylene-5-vinyl-2-norbornene copolymer, ethylene-propylene-1,4-hexadiene copolymer, ethylene-1-butene-dicyclopentadiene copolymer, ethylene-1-butene-5-ethylidene-2-norbornene copolymer, ethylene-1-butene-1, 4-hexadiene copolymer.

Specific examples of crystalline olefinic polymers may include polyethylene, polypropylene, poly-1-butene, poly-4-methyl-1-pentene, ethylene-propylene copolymer, ethylene-1-butene copolymer, ethylene-4-methyl-1-pentene copolymer, ethylene-1-hexene copolymer, ethylene-vinyl acetate copolymer, ethylene acrylic acid (salt) copolymer, ethylene-methacrylic acid (salt) copolymer, ethylene-methacrylate copolymer, ethylene maleic acid copolymer, ethylene-maleic anhydride copolymer.

Still other olefinic polymers may be also similarly exemplified by the olefinic polymers having an unsaturated carboxylic acid or its derivative component such as acrylic acid, methacrylic acid, methacrylate, maleic acid, maleic anhydride, 2-norbornene-5,6-dicarboxylic acid, 2-norbornene-5,6-dicarboxylic acid anhydride, graft-copolymerized onto the olefinic polymers as exemplified above.

The intrinsic viscosity [η] of these olefinic polymers measured in decalin at 135 °C is 0.05 to 30 dl/g, preferably 0.1 to 25 dl/g.

(v) Polyolefin

The polyolefin to be used in the present invention is a low crystalline or crystalline homopolymer or copolymer composed mainly of an α-olefinic component such as ethylene, propylene, 1-butene, 1-pentene, 4-methyl-1-pentene, 1-hexene, 1-octene, 1-decene, 1-tetradecene, 1-hexadecene, 1-octadecene, 1-eicosene, etc., having a crystallinity as measured by X-ray diffraction of 0.5 to 95%, preferably 1 to 99%.

Specific examples of polyolefins may include polyethylene polypropylene, poly-1-butene, poly-4-methyl-1-pentene, poly-1-hexene, poly-1-octene, ethylene-propylene copolymer, ethylene-1-butene copolymer, ethylene-1-octene copolymer, propylene-1-butene copolymer, 4-methyl-1-pentene-1-octene copolymer and the like.

The intrinsic viscosity [η] of these polyolefins measured in decalin at 135°C is 0.01 to 30 dl/g, preferably 0.1 dl/g or 25 dl/g.

(vi) Block Copolymer or Graft Copolymer (I)

The block copolymer or graft copolymer to be used in the present invention contains three constituent units derived from polyphenylene ether, olefinic polymer and aromatic vinyl polymer.

These block copolymer or graft copolymer or mixtures comprising both thereof have an excellent compatibility between or uniform dispersibility of the polyphenylene ether, and the polyphenylene ether type resin composition obtained has an improved in solvent crack resistance and an improved impact resistance, heat resistance, water resistance, and mechanical strength.

Further, the polyolefin when formulated, improves the compatibility between or uniform dispersibility of the polyphenylene ether and polyolefin, and as a result, the composition obtained has an excellent compatibility and uniform dispersibility, excellent solvent crack resistance, and excellent impact resistance, heat resistance, water resistance, and moldability, and a low cost.

The polyphenylene ether constituting these block copolymer or graft copolymer (vi) can be exemplified by polyphenylene ethers as exemplified above for the polyphenylene ethers (i) and, as the aromatic vinyl polymer, the aromatic vinyl polymers as exemplified for the above aromatic vinyl polymers (ii) can be exemplified.

The olefinic polymer constituting these block copolymer or graft copolymer (vi) is a noncrystalline, low crystalline or crystalline olefinic polymer comprising an α-olefinic component such as ethylene, propylene, 1-butene, 1-pentene, 4-methyl-1-pentene, 1-hexene, 1-octene, 1-decene, 1-dodecene, 1-tetradecene, 1-hexadecene, 1-octadecene, 1-eicocene and the like. Other than these α-olefinic components, a small amount of a diene component such as butadiene, isoprene, 1,4-hexadiene, 5-ethylidene-2-norbornene, 5-vinyl-2-norbornene, vinyl acetate or an unsaturated carboxylic acid or its derivative component such as acrylic acid (salt), methacrylic acid (salt), acrylate methacrylate, maleic acid, maleic anhydride, maleate, 2-norbornene-5,6-dicarboxylic acid, 2-norbornene-5,6-dicarboxylic anhydride may be also randomly copolymerized or graft copolymerized.

Among these olefinic polymers, specific examples of noncrystalline or low crystalline olefinic polymers may include ethylene-propylene copolymer, ethylene-1-butene copolymer, ethylene-1-hexene copolymer, propylene-1-butene copolymer, propylene-1-butene-4-methyl-1-pentene copolymer, 1-hexene-4-methyl-1-pentene copolymer, ethylene-propylene-dicyclopentadiene copolymer, ethylene-propylene-5-ethylidene-2-norbornene copolymer, ethylene-propylene-5-vinyl-2-norbornene copolymer, ethylene-propylene-1,4-hexadiene copolymer, ethylene-1-butene-dicyclopentadiene copolymer, ethylene-1-butene-5-ethylidene-2-norbornene copolymer, ethylene-1-butene-1,4-hexadiene copolymer. Specific examples of crystalline olefinic polymers may include polyethylene, polypropylene, poly-1-butene, poly-4-methyl-1-pentene, ethylene-propylene copolymer, ethylene-1-butene copolymer, ethylene-4-methyl-1-pentene copolymer, ethylene-1-hexene copolymer, ethylene-vinyl acetate copolymer, ethylene acrylic acid (salt) copolymer, ethylene-methacrylic acid (salt) copolymer, ethylene- methacrylate copolymer, ethylene-maleic acid copolymer, ethylene-maleic anhydride copolymer.

Still other olefinic polymers may be also similarly exemplified by the olefinic polymers having unsaturated carboxylic acid or its derivative component such as acrylic acid, methacrylic acid, methacrylate, maleic acid, maleic anhydride, 2-norbornene-5,6-dicarboxylic acid, 2-norbornene-5,6-dicarboxylic anhydride, graft-copolymerized onto the olefinic polymers as exemplified above.

The intrinsic viscosity [η] of these olefinic polymers measured in decalin at 135°C is 0.01 to 30 dl/g, preferably 0.05 to 25 dl/g.

The weight ratio of (A) polyphenylene ether/(B) olefinic polymer/(C) aromatic vinyl polymer constituting

the block copolymer or graft copolymer (vi) may be 5 to 95% by weight of the component (A)/5 to 95% by weight of the component (b), 5 to 95% by weight of the component (c), preferably 10 the 90% by weight of the component (a)10 to 90% by weight of the component (b)/10 to 90% by weight of the component (c).

As specific structures of such block or graft copolymers, the following examples can be shown; namely, tri-block copolymers of aromatic vinyl polymer, olefinic polymer and polyphenylene ether, copolymers having aromatic vinyl polymer and polyphenylene ether graft-polymerized onto the side chain of olefinic polymer.

Among the above, the block copolymer can be prepared as follows: For example, by reacting an aromatic vinyl polymer, polyphenylene ether having a functional group such as a carboxyl group, phenolic hydroxyl group on one terminal end with an olefinic polymer having epoxy groups, isocyanate groups capable of reacting with these terminal functional groups on both terminal ends in the presence or absence of a catalyst.

On the other hand, a graft-copolymer can be prepared as follows: For example, by introducing reactive groups such as an epoxy group into a polymer having an aromatic vinyl polymer graft-polymerized onto the side chain of an olefinic polymer (for example, by graft-polymerization of glycidyl methacrylate), and reacting this with a polyphenylene ether having phenolic hydroxyl group, hydroxyl group, carboxyl group, etc., capable of reacting the above functional groups at one terminal end in the presence or absence of a catalyst.

(vii) Block Copolymer or Graft Copolymer (II)

The block copolymer or graft copolymer to be used in the present invention contains at least two of three constituent units derived from polyphenylene ether, olefinic polymer, and aromatic vinyl polymer.

By formulating these block copolymer, graft copolymer or both thereof into the polyphenylene ether type composition, the compatibility of polyphenylene ether with polyamide is enhanced, and the polyphenylene ether type resin composition has an improved solvent crack resistance and an improved impact resistance, heat resistance, water resistance, and mechanical strength. Further, when a polyolefin is formulated, the compatibility between or uniform dispersibility of the polyphenylene ether and polyphenylene ether is improved, and as a result, the composition obtained has an excellent compatibility and uniform dispersibility, an excellent solvent crack resistance, and an excellent impact resistance, heat resistance, water resistance, and moldability, and a low cost.

The block or graft copolymer is a block or graft copolymer having at least two components of polyphenylene ether, polyamide or polyolefin polymer, which can be exemplified by block copolymers having at least two components of the above components such as the A-B type, the A-B-A type, the (A-B) type, the A-B-C type, $-(\text{A-B-C})-_n$ type, etc. Specific examples of the A-B type or $-(\text{A-B})-_n$ may include polyphenylene ether-polyamide block copolymer, polyphenylene ether-olefinic polymer block copolymer, polyamide-olefinic polymer block copolymer, etc. As the A-B-C type or the $-(\text{A-B-C})-_n$ type block copolymer, block copolymers containing the above three components can be exemplified. As the graft copolymer, copolymers having other components graft-polymerized onto a side chain of either of polyphenylene ether type polymer, polyamide or polyolefin polymer can be exemplified, including specifically a copolymer having a polyamide grafted onto the side chain of polyphenylene ether, a polymer having a polyphenylene ether grafted onto the side chain of olefinic polymer, and a graft copolymer having a polyphenylene ether and olefinic polymer bound to the both ends of polyamide.

Of these, block copolymers can be prepared as follows: For example, by reacting the above polyphenylene ether, olefinic polymer having epoxy group, isocyanate group, etc., capable of reacting with the carboxyl group or amino group at one end or both ends with the carboxyl group or amino group of the terminal functional group of polyamide, AB type, A-B-A type $-(\text{AB})-_n$ type, A-B-C, etc. can be prepared.

On the other hand, the graft copolymers can be prepared as follows: For example, by reacting the polyphenylene ether, polyamide, olefinic polymer having reactive functional groups such as acid anhydride group, hydroxyl group, carboxyl group, epoxy group, etc., in the side chain with other polymers as mentioned above having hydroxyl groups, epoxy group, isocyanate group, etc., capable of reacting with the above functional groups to form bonds, graft copolymers can be prepared.

The polyphenylene ether constituting these block copolymer or graft copolymer can be exemplified by

polyphenylene ethers as exemplified above for the polyphenylene ethers (i), and as the aromatic vinyl polymer, the aromatic vinyl polymers as exemplified for the above aromatic vinyl polymers (ii), and further, as the olefinic polymer, as exemplified for the above block copolymer or graft copolymer (vi), can be exemplified.

(viii) Polyamide

The polyamide to be used in the present invention is obtained by polycondensation of a diamine and a dicarboxylic acid, self-condensation of a ω-amino acid, ring-opening polymerization of lactams, and has a molecular weight necessary for the formation of a product.

Specific examples of such polyamide may include polyhexamethyleneadipamide, polyhexamethyleneazelamide, polyhexamethylenesebacamide, polyhexamethylenedodecanoamide, polybis(4-aminocyclohexyl)methanedodecanoamide, polycaprolactam, polylauriclactam, poly-11-aminoundecanoic acid, meta-xylene-adipamide or copolymers of these.

The intrinsic viscosity [$\eta$] of such polyamide measured in conc. sulfuric acid at 30 °C may be 0.05 to 5 dl/g, preferably 0.1 to 3 dl/g.

By formulating such a polyamide into the polyphenylene ether type resin composition, the heat resistance of the resin composition obtained is improved and the moldability is also improved.

(ix) Modified Olefinic Polymer

The modified olefinic polymer to be used in the present invention is an olefinic polymer having a radical polymerizable unsaturated monomer graft polymerized onto a part or the whole of the olefinic polymer as described below. Specific examples of such radical polymerizable unsaturated monomer may include unsaturated carboxylic acids such as acrylic acid, methacrylic acid, acrylic acid, maleic acid, itaconic acid, citraconic acid, 2-norbornene-5,6-dicarboxylic acid; unsaturated carboxylic anhydrides such as maleic anhydride, itaconic anhydride, citraconic anhydride, 2-norbornene-5,6-dicarboxylic anhydride; unsaturated carboxylic acid derivatives such as esters of unsaturated carboxylic acids, including methyl acrylate, methyl methacrylate, dimethyl maleate, diethyl itaconate, dibutyl citraconate, dimethyl 2-norbornene-5,6-dicarboxylate; epoxy-containing unsaturated monomers such as glycidyl acrylate, glycidyl methacrylate, diglycidyl maleate, glycidyl allyl ether; aromatic vinyl compounds such as styrene, α-methylstyrene, o-vinyltoluene, m-vinyltoluene, p-vinyltoluene, indene. Of these radical polymerizable monomers, unsaturated carboxylic acids, anhydrides thereof, epoxy-containing unsaturated monomers or aromatic vinyl compounds are preferred.

The content of these radical polymerizable unsaturated monomers graft-copolymerized in the modified olefinic polymer may be in the range of 0.1 to 75% by weight, preferably 0.5 to 60% by weight.

As the method for preparation of these modified olefinic polymers, it is possible to employ the method in which an olefinic polymer and the above radical polymerizable unsaturated monomer are melted and kneaded under heated conditions in the presence or absence of a radical initiator, or alternatively, to employ the method in which an olefinic polymer and the above radical polymerizable unsaturated monomer are reacted with each other under heated conditions in an inert organic medium in the presence or absence of a radical initiator. The temperature during the graft reaction may be 50 to 330 °C, preferably 60 to 300 °C.

Here, the olefinic polymer constituting the modified olefinic polymer can be exemplified by those as exemplified for the above block copolymer (vi).

(x) Polyester

The polyester to be used in the present invention is obtained by esterified polycondensation of an aromatic dicarboxylic acid component and a diol component. Examples of the aromatic dicarboxylic acid may include terephthalic acid, isophthalic acid, phthalic acid, naphthalene-2,6-dicarboxylic acid, naphthalene-1,4-dicarboxylic acid, and particularly terephthalic acid or aromatic dicarboxylic acids containing terephthalic acid as the main component are preferred. Examples of the diol component may include alkylene glycols such as ethylene glycol, 1,4-butylene glycol, diethylene glycol, polyethylene glycol. Particularly, alkylene glycol or diols containing alkylene glycol as the main component are preferred.

As such a polyester, polyalkylene, terephthalate formed by esterified polycondensation of terephthalic acid or aromatic dicarboxylic acid composed mainly of terephthalic acid as the aromatic dicarboxylic acid component and an alkylene glycol or diol composed mainly of an alkylene glycol is preferred. Specific examples of such a polyalkylene terephthalate may include polyethyleneterephthalate, polybutyleneterephthalate and the like.

The intrinsic viscosity [$\eta$] of such polyester measured in o-chlorophenol at 30° C may be 0.05 to 5 dl/g, preferably 0.1 to 3 dl/g.

By formulating such a polyester into the polyphenylene ether type resin composition, the moldability and heat resistance of the resin composition are improved.

(xi) Olefinic Polymer Having Oxazoline Ring

The olefinic polymer having an oxazoline ring to be used in the present invention is a polymer comprising an olefinic polymer having a vinyloxazoline component block copolymerized or graft-copolymerized therewith.

As the method for preparing an olefinic polymer having oxazoline ring by graft-copolymerization of vinyloxazoline onto an olefinic polymer, the method in which an olefinic polymer and vinyloxazole are melted and kneaded under heated conditions in the presence or absence of a radical initiator can be employed and the method in which an olefinic polymer and vinyloxazoline are reacted with each other under the heated conditions in an inert medium in the presence or absence of a radical initiator can be also employed. The temperature during graft reaction may be 50 to 330° C, preferably 60 to 300° C. Here, the vinyloxazoline component in the olefinic polymer having oxazoline ring may be 0.1 to 50% by weight, preferably 0.5 to 30% by weight.

The olefinic polymer constituting the olefinic polymer having oxazoline ring is exemplified by those as exemplified for the above block copolymer (vi).

(xii) Cyclic Olefinic Copolymer

The cyclic olefinic polymer to be used in the present invention is a cyclic olefinic random copolymer comprising (1) an ethylenic component and a cyclic olefinic component represented by the formula [I] or the formula [II] shown below,

(i) the recurring unit (a) derived from ethylene comprising 40 to 97% mol% and the recurring unit derived from the cyclic olefin comprising 3 to 60 mol% of the copolymer;

(ii) the recurring unit (b) derived from the cyclic olefin forming a structure represented by the formula [III] or the formula [IV] shown below;

(iii) the intrinsic viscosity [n] measured in decalin at 135° C being in the range of 0.01 to 20 dl/g, preferably 0.05 to 10 dl/g.

(iv) the molecular weight distribution ( $\overline{M}$ w/ $\overline{M}$ n) measured by gel permeation chromatography being 10 or less, preferably 8 or less, particularly preferably 4 or less;

(v) the glass transition temperature (Tg) being in the range of 10 to 240° C, preferably 20 to 200° C; and

(vi) the crystallinity measured by X-ray diffraction being in the range of 0 to 10%, preferably 0 to 7%.

Formulae:

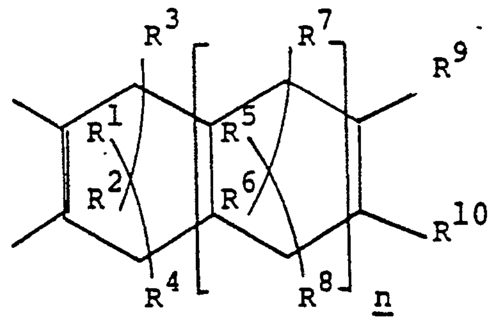

[I]

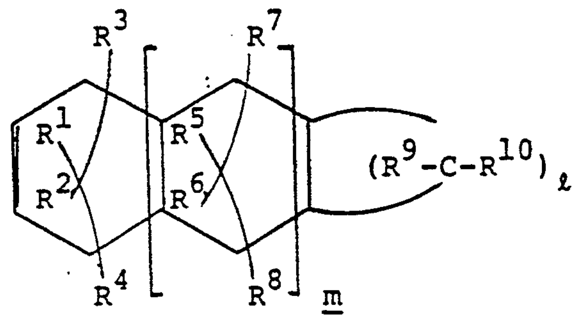

[II]

[wherein n and m are each a positive integer, ℓ is an integer of 3 or more, and $R^1$ - $R^{10}$ each represent hydrogen atom, a halogen atom or a hydrocarbon group].

Formulae:

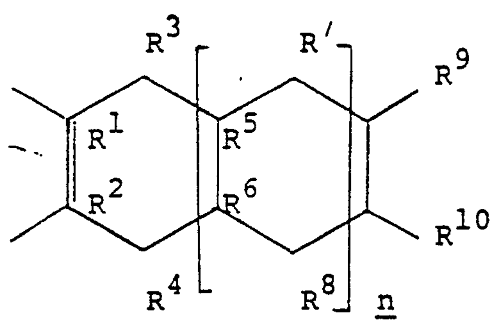

[III]

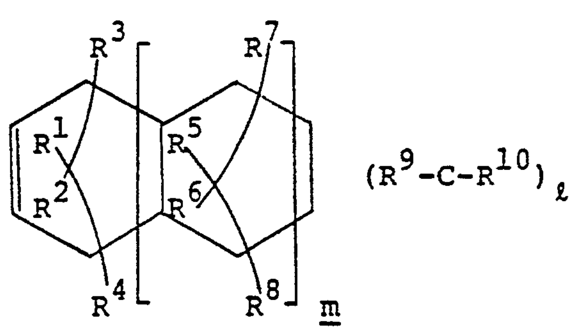

[IV]

[wherein n, m, ℓ and $R^1$ - $R^{10}$ have the same meanings as defined above].

The molecular weight distribution ( $\overline{M}$ w/ $\overline{M}$ n) of the cyclic olefinic random copolymer measured by gel permeation chromatography (GPC) is in the range of 10 or less, preferably 8 or less, particularly preferably 4 or less.

The cyclic olefinic random copolymer can be prepared according to the process as shown below. That is, in a process for copolymerizing ethylene with at least one cyclic olefin selected from the group consisting of unsaturated monomers represented by the above formula [I] or the above formula [II] in a liquid phase comprising a hydrocarbon medium in the presence of a catalyst formed from a soluble vanadium compound and an organic aluminum compound, the soluble vanadium compound is fed into the polymerization reaction system continuously while controlling the concentration thereof at 10-fold or less of the concentration of the soluble vanadium compound in the polymerization reaction system to maintain the ratio of aluminum atoms to vanadium atoms (Al/V) in the liquid phase in the polymerization reaction system at 2 or higher, and ethylene and the cyclic olefin are continuously fed so that the recurring unit (a) derived from the ethylene component in the copolymer may become 40 to 97 mol% and the recurring unit (b) derived from the cyclic olefin component may become 3 to 60 mol%, thus carrying out a continuous copolymerization to prepare the copolymer.

The cyclic olefin to be used as the polymerization starting material is at least one cyclic olefin selected from the group consisting of unsaturated monomers represented by the above formula [I] and the formula [II]. The cyclic olefin represented by the formula [I| can be easily prepared by condensation of a cyclopentadiene and a corresponding olefin according to the Diels-Alder reaction, and the cyclic olefin represented by the formula [II| can be easily prepared similarly by condensation of a cyclopentadiene and a corresponding cyclic olefin according to the Diels-Alder reaction.

Specific examples of the cyclic olefin represented by the formula [I] may include 1,4,5,8-dimethano-1,2,3,4a,5,8,8a-octahydronaphthalene, and otherwise 2-methyl-1-,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2-propyl-1,4,5,8-dimethano-1,2,3,4,4a,5,8,8a-octahydronaphthalene, 2-hexyl-1,4,5,8-dimethano-1,2,3,4,4a,5,8,8a-octahydronaphthalene, 2-stearyl-1,4,5,8-dimethano-1,2,3,4,4a,5,8,8a-octahydronaphthalene, 2,3,-dimethyl-1,4,5,8-dimethano-1,2,3,4,4a,5,8,8a-octahydronaphthalene, 2-methyl-3-ethyl-1,4,5,8-dimethano-1,2,3,4,4a,5,8,8a-octahydronaphthalene, 2-chloro-1,4,5,8-dimethano-1,2,3,4,4a,5,8,8a-octahydronaphthalene, 2-bromo-1,4,5,8-dimethano-1,2,3,4,4a,5,8,8a-octahydronaphthalene, 2-fluoro-1,4,5,8-dimethano-1,2,3,4,4a,5,8,8a-octahydronaphthalene, 2,3-dichloro-1,4,5,8-dimethano-1,2,3,4,4a,5,8,8a-octahydronaphthalene, 2-cyclohexyl-1,4,5,8-dimethano-1,2,3,4,4a,5,8,8a-octahydronaphthalene, 2-n-butyl-1,4,5,8-dimethano-1,2,3,4,4a,5,8,8a-octahydronaphthalene, 2-isobutyl-1,4,5-8-dimethano-1,2,3,4,4a,5,8,8a-octahydronaphthalene and other octahydronaphthalenes, and compounds as exemplified below:

5,10-dimethyltetracyclo [4,4,0,$1^{2.5}$,$1^{7.10}$]-3-dodecene, 2,10-dimethyltetracyclo [4,4,0.$1^{2.5}$,$1^{7.10}$]-3-dodecene, 11,12-dimethyltetracyclo [4,4,0,$1^{2.5}$,$1^{7.10}$]-3-dodecene, 2,7,9-trimethyltetracyclo[4,4,0,$1^{2.5}$,-$1^{7.10}$]-3-dodecene, 9-ethyl-2,7-dimethyltetracyclo [4,4,0,$1^{2.5}$,$1^{7.10}$]-3-dodecene, 9-isobutyl-2,7-dimethyltetracyclo [4,4,0,$1^{2.5}$,$1^{7.10}$]-3-dodecene, 9,11,12-trimethyltetracyclo [4,4,0,$1^{2.5}$,$1^{7.10}$]-3-dodecene, 9-ethyl-11,12-dimethyltetracyclo [4,4,0,$1^{2.5}$,$1^{7.10}$]-3-dodecene, 9-isobutyl-11,12-dimethyl-3-tetracyclo [4,4,0,$1^{2.5}$,$1^{7.10}$]-3-dodecene, 5,8,9,10-tetramethyltetracyclo [4,4,0,$1^{2.5}$,$1^{7.10}$]-3-dodecene, hexacyclo [6,6,1,$1^{3.6}$,$1^{10.13}$,$0^{2.7}$,$0^{0.14}$]-4-heptadecene, 12-methylhexacyclo [6,6,1,$1^{3.6}$,$1^{10.13}$,$0^{2.7}$,$0^{0.14}$]-4-heptadecene, 12-isobutylhexacyclo [6,6,1,$1^{3.6}$,$1^{10.13}$,$0^{2.7}$,$0^{0.14}$]-4-heptadecene, 1,6,10-trimethyl-12-isobutylhexacyclo [6,6,1,$1^{3.6}$,$1^{10.13}$,$0^{2.7}$,$0^{0.14}$]-4-heptadecene, octacyclo [8,8,$1^{2.0}$,$1^{4.7}$,$1^{11.10}$,$1^{13.16}$,0,$0^{3.8}$,$0^{12.17}$]-5-docosene, 15-methylostacyclo [8,8,$1^{2.0}$,$1^{4.7}$,$1^{11.10}$,$1^{13.16}$,0,$0^{3.8}$,$0^{12.17}$]-5-docosene, 15-ethyloctacyclo [8,8,$1^{2.0}$,$1^{4.7}$,$1^{11.10}$,$1^{13.16}$,0,$0^{3.8}$,$0^{12.17}$]-5-docosene.

On the other hand, specific examples of the cyclic olefin represented by the formula [II] may include the compounds as shown below:

1,3-dimethylpentacyclo [6,6,1,$1^{3.6}$,$0^{2.7}$,00.14 -4-hexadecene, 1,6-dimethylpentacyclo [6,6,$1^{3.6}$,$0^{2.7}$,$0^{9.14}$]-4-hexadecene, 15,16-dimethylpentacyclo [6,6,1,$1^{3.6}$,$0^{2.7}$,$0^{9.14}$]-4-hexadecene, pentacyclo [6,5,1,$1^{3.6}$,$0^{2.7}$,$0^{9.13}$]-4-pentadecene, 1,3-dimethylpentacyclo [6,5,1,$1^{3.6}$,$0^{2.7}$,$0^{9.13}$]-4-pentadecene, 1,6-dimethylpentacyclo [6,5,1,$1^{3.6}$,$0^{2.7}$,$0^{9.13}$]-4-pentadecene, 14,15-dimethylpentacyclo [6,5,1,$1^{3.6}$,$0^{2.7}$,$0^{9.13}$]-4-pentadecene, pentacyclo [6,5,1,$1^{3.6}$,$0^{2.7}$,$0^{9.13}$]-4-hexadecene, heptacyclo [8,7,$1^{2.0}$,$1^{4.7}$,$1^{11.17}$,0,$0^{3.3}$,$0^{12.16}$]-5-icosene, pentacyclo [8,8,$1^{2.0}$,$1^{4.7}$,$1^{11.17}$,0,$0^{3.3}$,$0^{12.17}$]-5-henicosene.

(xiii) Epoxy resin

The epoxy resin to be used in the present invention is a compound having one or more, preferably two or more epoxy groups in one molecule.

Specific examples of such epoxy resins may include, for example, glycidyl ether type epoxy resins of

polyphenolic compounds such as bisphenol A, bisphenol F, 1,1,2,2-tetrakis(4-hydroxyphenyl)ethane; glycidyl ether type epoxy resins of nucleus-hydrogenated products of the above phenolic compounds: glycidyl ether type epoxy resins of polyhydric phenols such as catechol, resorcin, hydroquinone, fluoroglycine; glycidyl ether type epoxy resins of polyhydric alcohols such as ethylene glycol, butane diol, glycerol, erythritol, polyoxyalkylene glycol; novolac type epoxy resins; alicyclic epoxy resins such as vinylcyclohexene dioxide, limonene dioxide, dicyclopentadiene dioxide; polyglycidylester type epoxy resins of ester condensates of polycarboxylic acid such as phthalic acid, cyclohexane-1,2-dicarboxylic acid; polyglycidyl-amine type epoxy resins; methylepichloro type epoxy resins; and so on. Among these epoxy resins, glycidyl ether type epoxy resins or novolac type epoxy resins are preferably used.

(xiv) Hydrocarbon Resin or its Hydrogenated Product

The hydrocarbon resin to be used in the present invention is a resin obtained by cationic polymerization of the unsaturated hydrocarbon containing distillates by-produced during the thermal cracking of petroleum or a mixed distillate thereof or the distillate controlled in an unsaturated hydrocarbon component by using a catalyst such as a Friedel-Crafts type catalyst, etc.

In the distillates within the boiling point range from -10 to 100° C, preferably from 0 to 80° C, as the unsaturated hydrocarbon containing the distillates, mixed components of aliphatic unsaturated hydrocarbon components such as 1-butene, 2-butene, isobutylene, butadiene, isoprene, cyclopenadiene, 1-pentene, 2-pentene, isopentene, 1-hexene, 2-hexene, 3-methyl-1-pentene, 4-methyl-1-pentene, methylcyclopentene, etc., are contained, and these aliphatic unsaturated hydrocarbon components may be used as such for the polymerization starting material, or alternatively the distillates may be applied with a specific treatment or specific components such as butadiene, isoprene, cyclopentadiene may be removed from the aliphatic unsaturated hydrocarbon containing distillates before used for the polymerization starting material. In the distillates with the boiling point range of 140 to 280° C, preferably 150 to 240° C, mixed components of aromatic unsaturated hydrocarbon components such as styrene, α-methylstyrene, o-vinyltoluene, m-vinyltoluene, p-vinyltoluene, indene, methylindene, divinylbenzene are contained, and the aromatic unsaturated hydrocarbon containing distillates may be used as such for the polymerization starting material, or alternatively the distillates may be applied with a specific treatment or specific components may be removed from the aromatic unsaturated hydrocarbon containing distillates before used for the polymerization starting material. Also, mixed distillates comprising any desired ratio of the above aliphatic hydrocarbon containing distillates and the above aromatic unsaturated hydrocarbon containing distillates can be used for the polymerization starting material. As the Friedal-Crafts type catalyst, $BF_3$ , various complexes of $BF_3$ , $AlCl_3$ , $AlBr_3$ , etc. may be exemplified.

The hydrocarbon resin to be used in the present invention may include, for example, aliphatic hydrocarbon resin, aromatic hydrocarbon resin, or aliphatic aromatic copolymerized hydrocarbon resin, depending on the polymerization starting material. The hydrogenated products of these hydrocarbon resins can be prepared by hydrogenating partially or wholly the unsaturated bonds and/or aromatic ring in the presence of hydrogen under a high pressure in the presence of a hydrogenation catalyst such as Raney nickel or Raney cobalt.

The number average molecular weight ( $\overline{M}$ n) of the hydrocarbon resin or its hydrogenated product by gel permeation chromatography may be in the range of 500 to 100000, preferably 500 to 50000, particularly preferably 600 to 10000, with the molecular weight distribution being in the range of 1.1 to 40, preferably 1.1 to 30, particularly preferably 1.1 to 15. The glass transition temperature (Tg) measured by differential scanning calorimeter (DSC) is lower than 100° C, more specifically -50 to 95° C, preferably -30 to 90° C, particularly preferably -10 to 90° C.

(xv) Inorganic Filler or Organic Filler

In the present invention, in addition to the polyphenylene ether, the aromatic vinyl polymer, the polyphenylene-polyolefin copolymer and the polyolefin, an inorganic filler or an organic filler or both thereof can be contained.

As the inorganic filler, there may be specifically employed, for example, silica, silica-alumina, alumina, glass powder, glass beads, glass fibers, glass fiber cloth, glass fiber mat, asbestos, graphite, carbon fiber, carbon fiber cloth, carbon fiber mat, titanium oxide, molybdenum disulfide, magnesium hydroxide, talc, cerite, metal powder, and metal fiber.

As the organic filler, there may be specifically employed fibrous materials of whole aromatic polyamides such as polyterephthaloyl-p-phenylenediamine, polyterephthaloyl-isophthaloyl-p-phenylenediamine, polyisophthaloyl-p-phenylenediamine, polyisophthaloyl-m-phenylenediamine and the like, or fibrous materials of polyamides such as nylon 66, nylon 6, and nylon 10.

These fibrous materials can be used in the form of monofilaments, strands, cloth or mats.

## EXAMPLES

The present invention now will be further illustrated by, but is by no means limited to, the following Examples.

The following abbreviated symbols used in the evaluation methods, Examples, Comparative Examples for the compositions in the present invention show the following compounds, respectively.

PPO: poly-2,6-dimethyl-1,4-phenylene ether (trial product, intrinsic viscosity in chloroform at 30 ° C: 0.47 dl/g)

PP: polypropylene (produced by Mitsui Sekiyu Kagaku K.K., Hipol®, J300, intrinsic viscosity in decalin at 135 ° C: 2.8 dl/g)

PSt: polystyrene (produced by Mitsui Toatsu Kagaku K.K., Topolex® 500-51)

GF: glass fiber (produced by Nittobo K.K., CS3PA, 3 mm)

$C_9$-$C_5$: Alyphatic, aromatic hydrocarbon copolymer resin (cationic polymer of $C_9$ distillate and $C_5$ distillate formed from naphtha cracking, trial product), average molecular weight (vapor pressure method) 1100, softening point (ring and ball method) 120 ° C (copolymer of vinyltoluene-indene-isoprene-perylene, etc., contents of the respective components: 25, 17, 10, 20% by weight), Tg (DSC) 53 ° C

$C_9$: aromatic hydrocarbon resin, produced by Mitsui Sekiyu Kagaku K.K., petrosin® #120, average molecular weight (vapor pressure method) 1000, softening point (ring and ball method) 120 ° C (copolymer of vinyltoluene-indene, etc. vinyltoluene: 40% by weight, indene: 30% by weight), Tg (DSC) 57 ° C

$C_9H$: nucleus hydrogenated product of aromatic hydrocarbon resin, nucleus hydrogenated product of letrosin® #120, average molecular weight (vapor pressure method) 820, softening point (ring and ball method) 125 ° C, (nucleous hydrogenation percentage: 70%), Tg (DSC) 57 ° C

I Method for preparation of composition

PPO, PSt, block or graft copolymer shown in Reference Example, PP and filler were mixed in the proportions shown in the Tables to prepare a dry blended product. The dry blended product was fed into a biaxial extruder (L/D = 42, 30 mmø) set at 270 ° C to obtain a melt blended product. Then, injecting molding was performed under the following conditions to prepare a specimen for a measurement of the physical properties.

Cylinder temperature: 290 ° C
Injection pressure : 1000 $kg/cm^2$/800 $kg/cm^2$ primary/secondary
Mold temperature : 80 ° C

II Method for evaluation of composition

MFR: measured according to ASTM D-1238-79.0 condition.

Flexural rest: a test strip with a thickness of 1/8" was used to measure the flexural modulus FM ($kg/cm^2$) according to ASTM D-790-80.

Izod impact strength: a test strip with a thickness of 1/8" was used to conduct the measurement according to ASTM D-256.

Heat distortion temperature: the HDT ( ° C) was measured according to ASTM D-648 under the conditions of load of 18.6 $kg/cm^2$ and 4.6 $km/cm^2$.

Heat deflection: the amount of deflection was measured after the sample was left to stand in an oven at 160 ° C for 1 hour.

Solvent crack resistance: a test strip with a thickness of 1/8" and having a 1% distortion applied thereto was dipped in acetone at normal temperature for 48 hours, and the generation of cracks was observed by the naked eye.

III Method for preparation of graft or block copolymer

Reference Example 1-1

To 50 parts by weight of a polypropylene (produced by Mitsui Sekiyu Kagaku K.K., Hipol® B200) were added 1000 parts by weight of P-xylene to dissolve the polymer at 125°C under a nitrogen gas stream, and 5 parts by weight of glycidyl methacrylate (GMA) and 0.5 part by weight of dicumyl peroxide were added dropwise to carry out the graft reaction. The reaction mixture was then cooled to room temperature and a large amount of acetone added thereto, and the precipitates were separated by filtration. The precipitated polymer was then washed repeatedly with acetone and dried in a vacuum. The modified propylene had a GMA content of 3.2% by weight and $[\eta]$ = 1.80 dl/g.

After 50 parts by weight of the GMA-modified polypropylene obtained by the method described above and 50 parts by weight of the above PPO were dry blended, the blend was fed into a 30 mmø biaxial extruder (L/D = 42) and melted and kneaded at 270°C. As a result of a measurement by titration of the hydroxyl equivalent of the pellets, it was found that the reaction had proceeded substantially quantitatively.

Reference Example 1-2

Method of preparation PPO grafted polyolefin

To 100 parts by weight of an ethylene-propylene random copolymer (EPR) having a melt index at 190°C of 0.4 g/10 min, an ethylene content of 80% and a crystallinity of 1%, were added 3 parts by weight of acrylic acid and 0.05 part by weight of 2,5-dimethyl-2,5(tertiary butylperoxy)hexyne-3 and the mixture was kneaded by a monoaxial extruder (30 mmø, L/D = 28) set at 230°C to obtain an EPR grafted with acrylic acid. Oxygen analysis showed that the amount of acrylic acid grafted of the grafted product was 2.5% by weight.

Next, into a stainless steel autoclave having an inner volume of 30 liter was charged 10 liters of epichlorohydrin, followed by the addition of 300 g of PPO. The temperature of the mixture was then elevated by heating by an external jacket, and the polymer was completely dissolved while stirring at a temperature of 100°C maintained for about 30 minutes, and thereafter, 50 cc of 10% aqueous caustic soda was added, followed by a reaction in a nitrogen atmosphere at 100°C for 3 hours. After completion of the reaction, epichlorohydrin was evaporated under a reduced pressure, and the resultant polymer was dissolved in 3 liters of chloroform. After the solids (NaCl formed and excessive NaOH) liberated in the polymer solution were removed by filtration, the polymer was reprecipitated with the addition of a solvent mixture of methanol/water (50/50), and after washing for 3 times with 10 liters of the same solvent, the polymer was dried at 100°C for 10 hours to obtain a glycidylated polyphenylene ether (hereinafter abbreviated as GPPO).

As a result of a titration of the polymer obtained by this operation according to the method defined in ISO-3001, using toluene as the solvent, the amount of glycidyl groups contained in 100 g of the polymer was found to be 5.6 x $10^{-3}$ mole. Since the number average molecular weight as determined according to the osmotic pressure method was 18000, it was confirmed that the polymer had approximately one glycidyl group per one molecule. From the above results, it was clear that the following reactions proceeded substantially quantitatively.

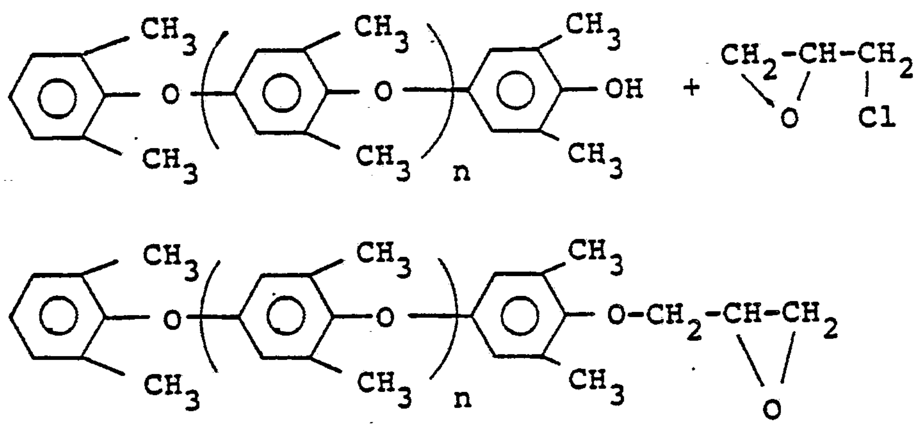

After dry blending 50 parts by weight of the EPR grafted with acrylic acid and 50 parts by weight of the glycidylated PPO synthesized according to the above methods, the blend was melted and kneaded by feeding through an extruder set at 270 °C. A measurement of the epoxy equivalent of the pellet confirmed that the glycidyl groups grafted to the PPO were completely reacted. Accordingly, it is clear that the following reactions proceeded substantially quantitatively.

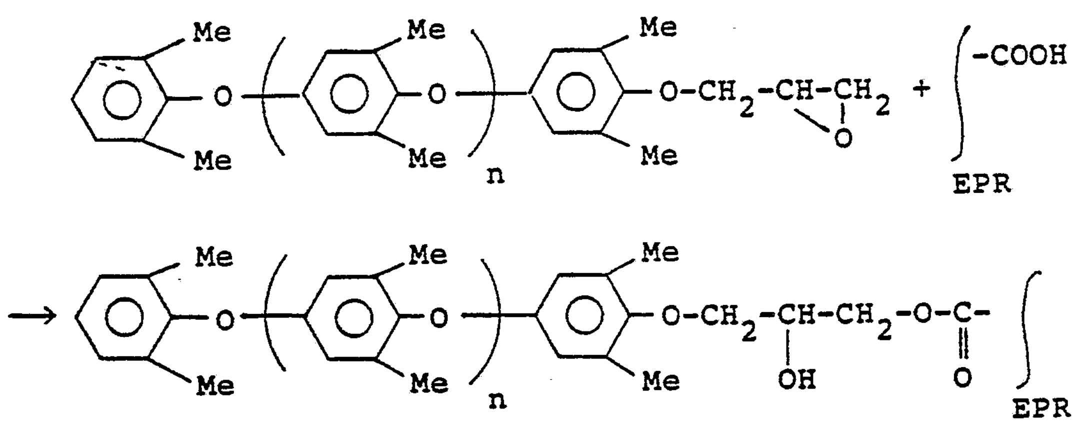

Reference Example 1-3

After dry blending 1 kg of poly(2,6-dimethyl phenylene-1,4-ether) powder having an inherent viscosity of 0.91 dl/g measured at 25 °C by using chloroform, 20 g of maleic anhydride, and 10 g of dicumyl peroxide at room temperature, the blend was melted and kneaded by a biaxial extruder equipped with a vent having the same directional rotation system with a screw diameter of 29 mm, wherein L/D = 25 under the conditions of a cylinder temperature of 300 °C and a screw rotational number of 150 rpm, and extruded with a residence time of 50 seconds and pelletized via cooling bath.

After 5 g of the pellets were sampled and fine-pulverized by a pulverizer, the powder was heated under reflux by a Soxhlet extractor, using 100 ml of ethanol, for 48 hours. Drying was then conducted under a reduced pressure at 110 °C for 5 hours to obtain a sample. The presence of the -COO- structure derived from the reaction with maleic anhydride in this sample was confirmed by analysis of the absorption peak at 1600 - 1800 $cm^{-1}$ in the Fourier integration type IR-absorption spectrum. A blend of 50 parts by weight of the maleated PPO (containing 10 mm/g of maleic anhydride) and 50 parts by weight of a hydrogenated product of 1,2-polybutadiene hydroxylated at one terminal end (Mn = 3000, OH: 0.3 mM/g) was fed into a biaxial extruder set at 270 °C to carry out the reaction of both with a residence time of 2 minutes, to obtain a PPO grafted with a hydrogenated product of 1,2-polybutadiene.

Reference Example 1-4

A blend of 50 parts by weight of a terminally epoxydized PPO (glycidyl group amount: 0.2 mM/g) prepared according to the method described in Reference Example 1-2 and 50 parts by weight of a hydrogenated product 1,2-polybutadiene hydroxylated at one terminal end described in Reference Example 1-3 (Mn = 3000, OH group: 0.3 mM/g) was fed into a biaxial extruder set at 270°C to carry out the reaction with a residence time of 2 minutes, whereby a block copolymer of the AB type was obtained.

Reference Example 1-5

A block copolymer of the ABA type was synthesized according to the same method described in Reference Example 1-4, except that a hydrogenated product of 1,2-polybutadiene hydroxylated at both terminal ends (Mn = 3000, OH group: 0.6 mM/g) was used in place of the hydrogenated product of 1,2-polybutadiene hydroxylated at one terminal end as used Reference Example 1-4.

Reference Example 2-1

PPO-PP-PSt graft copolymer

A blend of 100 parts by weight of a homopolypropylene (produced by Mitsui Sekiyu Kagaku K.K., Hipol® B200) powder, 10 parts by weight of styrene monomer, and 0.1 part by weight of 2,5-dimethyl-2,5-di(tertiary butylperoxyl)hexyne-3 was fed into an extruder set at 230°C, and the mixture was melted, kneaded, and cooled with water, followed by pelletizing.

After the pellets were dried, 4 parts by weight of glycidyl methacrylate (GMA) and 0.05 part by weight of 2,5-dimethyl-2,5-di-(tertiary butylperoxy)hexyne-3 were added, and the mixture was extruded under the same conditions as described above. The pellets obtained were subjected to Soxhlet extraction with methyl ethyl ketone for 20 hours and, after drying, the grafted amount was measured by IR-absorption spectrum and NMR spectrum. As a result, the styrene grafted onto the modified polypropylene was found to be 4% by weight, and the amount of GMA grafted thereon was 3% by weight.

After 80 parts by weight of the styrene-GMA grafted polypropylene prepared according to the above method, and 20 parts by weight of PPO, were dry blended, the blend was fed into a biaxial extruder set at 270°C and melted and kneaded with a residence time of 2 minutes, and after cooling with water, was pelletized.

When the amount of the epoxy group in the pellets was measured by titration, no epoxy group was detected. On the other hand, when the amount of the phenolic hydroxyl group was measured by titration, it was found that the amount corresponding to the epoxy group was reduced.

From the above results, it was clear that the PPO-St grafted PP was formed from the reaction of the PPO and the St-GMA grafted PP.

Reference Example 2-2

PPO-EPR-St graft copolymer

A PPO-St grafted EPR was obtained by carrying out the same operation as in Reference Example 2-1, except that an ethylene-propylene random copolymer (MFR at 190°C = 0.6 g/10 min, ethylene content: 80%) was used in place of the PP used in Reference Example 2-1.

Reference Example 2-3

St-HPB-PPO tri-block copolymer

Double bonds in a polybutadiene carboxyl-terminated at both ends (Nippon Soda Nisso PB C-1000, Mn = 1500) were hydrogenated with a Pd/C catalyst to obtain a hydrogenated polybutadiene carboxyl-terminated at both ends.

100 parts by weight of the HPB, 150 parts by weight of a polystyrene epoxydized at one terminal end (Mn = 5000), and 150 parts by weight of a polyphenylene ether epoxydized at one terminal end (Mn = 1200) were reacted under a nitrogen gas stream at 160 ° C for 5 hours. By measuring the epoxy group and acid value of the reaction product, it was confirmed that HPB had reacted with the polystyrene epoxydized at one terminal end.

<u>Reference Example 3-1</u> (method for preparation of polyamide-grafted PPO)

After 1 kg of a poly-2,6(dimethylphenylene-1,4-ether) powder with an inherent viscosity of 0.80 dl/g measured at 25 ° C by using of chloroform, 25 g of glycidyl methacrylate, and 10 g of dicumyl peroxide were dry blended, the blend was melted and kneaded by a biaxial extruder equipped with a vent having the same directional rotation system with a screw diameter of 3.0 mm, wherein L/D = 40 under the conditions of a cylinder temperature of 300 ° C and a screw rotation number of 150 rpm, and was extruded and pelletized via a cooling bath. After 6 g of the pellets were fine-pulverized by a pulverizer, the powder was heated under reflux in a Soxhlet extractor using 100 ml of acetone, for 48 hours. Drying was then conducted at 110 ° C for 5 hours to obtain a sample. The presence of the 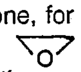 structure derived from the reaction with glycidyl methacrylate was confirmed by the UV-ray absorption spectrum.

After 50 parts by weight of the epoxydized PPO as obtained above and 50 parts by weight of Nylon-6 (CM-1021 x F, produced by Toray) were dry blended, the blend was fed into a biaxial extruder set at 270 ° C and extruded with a residence time of 2 minutes to obtain a nylon-grafted PPO.

<u>Reference Example 3-2</u> (preparation of PPO-grafted polyolefin)

To 50 parts by weight of a polypropylene (produced by Mitsui Sekiyu Kagaku K.K., Hipol® B200) were added 1000 parts by weight of P-xylene to dissolve the polymer at 125 ° C under a nitrogen gas stream, and 5 parts by weight of glycidyl methacrylate (GMA) and 0.5 part by weight of dicumyl peroxide were added dropwise to carry out the graft reaction. After the reaction mixture was cooled to room temperature, a large amount of acetone was added and the precipitates were separated by filtration. The precipitated polymer was then washed repeatedly with acetone and dried in vacuum. The modified propylene had a GMA content of 3.2% by weight and [$\eta$] = 1.80 dl/g.

<u>Reference Example 3-3</u> (PPO, polyamide, PP containing grafted copolymer)

After 100 parts by weight of the epoxydized PPO prepared in Reference Example 3-1, 100 parts by weight of the epoxydized PP prepared in Reference Example 2, and 100 parts by weight of Nylon-6 were dry blended, the blend was fed into a biaxial extruder set at 270 ° C, extruded, and pelletized to obtain the title graft copolymer.

<u>Reference Example 3-4</u>

Into a stainless steel autoclave having an inner volume of 30 liter, 10 liters of epichlorohydrin was charged and then 300 g of PPO were added. Subsequently, while stirring for about 30 minutes, the polymer was completely dissolved at 100 ° C, and then 50 cc of 10% aqueous caustic soda solution was added, followed by a reaction under a nitrogen atmosphere at 100 ° C for 3 hours. After completion of the reaction, epichlorohydrin was evaporated under a reduced pressure, and the resultant polymer was dissolved in 3 liters of chloroform. The solids (NaCL formed and excessive NaOH) liverated in the polymer solution were removed by filtration and a solvent mixture of methanol/water (50/50) was added to reprecipitate the polymer. The polymer was then washed 4 times with 10 liters of the same solvent, and dried at 100 ° C for 20 hours to obtain a glycidylated polyphenylene ether (hereinafter abbreviated as GPPO).

As a result of a titration of the polymer obtained by this operation according to the method defined in ISO-3001, using toluene as the solvent, the amount of glycidyl groups contained in 100 g of the polymer was found to be 6 x $10^{-3}$ mole. Since the number average molecular weight as determined by the osmotic pressure method was 18000, it was confirmed that the polymer had approximately one glycidyl group per one molecule at the terminal end.

By carrying out a melting reaction of 100 parts by weight of the terminal epoxydized PPO prepared as described above, 50 parts by weight of a hydrogenated 1,2-polybutadiene epoxydized at one terminal end (trial product, Mn = 3000) and 100 parts by weight of Nylon-6, a block copolymer of PPO-polyamide-polyolefin were prepared.

Reference Example 4-1 (method for preparation of maleated EPR)

To 100 parts by weight of an ethylene-propylene random copolymer (MFR at 190 °C: 0.4 g/10 min, ethylene content: 80 mole%, crystallinity: 1%, hereinafter abbreviated as EPR), 1 part by weight of maleic anhydride and 0.05 part by weight of 2,5-dimethyl-2,5-di(tertiary butylperoxy)hexane-3 were added, and after mixing, the mixture was melted and kneaded by feeding into a monoaxial extruder (15 mmø, L/D = 28) set at 250 °C. The pellets thus obtained were subjected to Soxhlet extraction with acetone for 20 hours and dried, followed by measurement of the IR-absorption spectrum. As a result, it was found that the EPR contained 0.9% by weight of maleic anhydride grafted thereon.

Reference Example 4-2 (method for preparation of PPO-grafted polyolefin)

To 50 parts by weight of a polypropylene (produced by Mitsui Sekiyu Kagaku K.K., Hipol® B200) were added 1000 parts by weight of P-xylene to dissolve the polymer at 125 °C under a nitrogen gas stream, and 5 parts by weight of glycidyl methacrylate (GMA) and 0.5 part by weight of dicumyl peroxide were added dropwise to carry out the graft reaction. The reaction mixture was then cooled to room temperature and a large amount of acetone added thereto, and the precipitates were separated by filtration. The precipitated polymer was then washed repeatedly with acetone and dried in vacuum. The modified propylene had a GMA content of 3.2% by weight and [$\eta$] = 1.80 dl/g.

Reference Example 4-3 (method for preparation of PPO-grafted polyolefin)

To 100 parts by weight of an ethylene-propylene random copolymer (EPR) having a melt index at 190 °C of 0.4 g/10 min and an ethylene content of 80%, 3 parts by weight of acrylic acid and 0.05 part by weight of 2,5-dimethyl-2,5-di(tertiary butylperoxy)hexyne-3 were added and the mixture was kneaded by a monoaxial extruder (15 mmø, L/D = 28) set at 230 °C to obtain an EPR grafted with acrylic acid. An oxygen analysis found that the amount of acrylic acid grafted of the grafted product was 2.5% by weight.

Reference Example 5-1 (method for preparation of polyalkylene terephthalate-grafted PPO)

After 1 kg of a poly-(2,6-dimethylphenylene-1,4-ether) powder with an inherent viscosity of 0.80 dl/g measured at 25 °C by using chloroform, 20 g of glycidyl methacrylate, and 10 g of dicumyl peroxide were dry blended at room temperature, the blend was melted and kneaded by a biaxial extruder equipped with a vent having the same directional rotation system with a screw diameter of 30 mm, wherein L/D = 40 under the conditions of a cylinder temperature of 300 °C and a screw rotation number of 150 rpm, and extruded with a residence time of 2 minutes, and then pelletized via a cooling bath. After 6 g of the pellets were fine-pulverized by a pulverizer, the powder was heated under reflux in a soxhlet extractor, using 100 ml of acetone, for 48 hours. Drying was then conducted at 110 °C for 5 hours under a reduced pressure to obtain a sample.

The presence of the 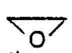 structure derived from the reaction with glycidyl methacrylate was confirmed by UV-ray absorption spectrum.

The epoxydized PPO prepared as described above (50 parts by weight) and a polybutylene terephthalate (intrinsic viscosity [η] measured at 30° C in orthochlorophenol: 0.5 dl/g, hereinafter abbreviated as PBT) were fed into a biaxial extruder set at 270° C and extruded with a residence time of 2 minutes, followed by pelletizing, to prepare a graft polymer of PPO and polyethylene terephthalate.

Reference Example 5-2 (preparation of PPO-grafted polyolefin)

To 50 parts by weight of a polypropylene (produced by Mitsui Sekiyu Kagaku K.K., Hipol® B200) were added 1000 parts by weight of P-xylene, to dissolve the polymer at 125° C under a nitrogen gas stream, and 5 parts by weight of glycidyl methacrylate (GMA) and 0.5 part by weight of dicumyl peroxide were added dropwise to carry out the graft reaction. The reaction mixture was then cooled to room temperature and a large amount of acetone was added, and the precipitates were separated by filtration. The precipitated polymer was then washed repeatedly with acetone and dried in a vacuum. The modified propylene had a GMA content of 3.2% by weight and [η] = 1.80 dl/g.

After 50 parts by weight of the GMA-modified polypropylene obtained by the method as described above and 50 parts by weight of the above PPO were dry blended, the blend was fed into a 30 mmø, biaxial extruder (L/D = 40), and melted and kneaded at 270° C. As a result of a measurement by titration of the hydroxyl equivalent of the pellets, it was found that the reaction had proceeded substantially quantitatively.

Reference Example 5-3 (PPO, PBT, olefinic copolymer containing grafted copolymer)

After 100 parts by weight of the epoxydized PPO shown in Reference Example 5-1, 100 parts by weight of the epoxydized PP shown in Reference Example 5-2 and 100 parts by weight of PBT shown in Reference Example 5-1 were dry blended, the blend was fed into a biaxial extruder set at 270° C, and melting, kneading, and pelletizing were conducted with a residence time of 2 minutes to obtain a graft copolymer of PPO-PBT-PP.

Reference Example 5-4 (PPO-olefinic polymer-PET block copolymer)

Into a stainless steel autoclave having an inner volume of 30 liters, 10 liters of epichlorohydrin was charged and then 300 g of PPO was added. Subsequently, while stirring for about 30 minutes, the polymer was completely dissolved at 100° C, and then 50 cc of 10% aqueous caustic soda solution was added, followed by a reaction under a nitrogen atmosphere at 100° C for 3 hours. After completion of the reaction, epichlorohydrin was evaporated under a reduced pressure, and the resultant polymer was dissolved in 5 liters of chloroform. The solids (NaCl formed and excessive NaOH) liverated in the polymer solution were removed by filtration and a solvent mixture of methanol/water (50/50) was added to reprecipitate the polymer. The polymer was then washed 4 times with 10 liters of the same solvent, and dried at 100° C for 20 hours to obtain a glycidylated polyphenylene ether (hereinafter abbreviated as GPPO).

As a result of a titration of the polymer obtained by this operation according to the method defined in ISO-3001, using toluene as the solvent, the amount of glycidyl groups contained in 100 g of the polymer was found to be 6 x $10^{-3}$ mole. Since the number average molecular weight as determined by the osmotic pressure method was 18000, it was confirmed that the polymer had approximately one glycidyl group per one molecule at the terminal end. From the above results, it was clear that the following reactions proceeded substantially quantitatively.

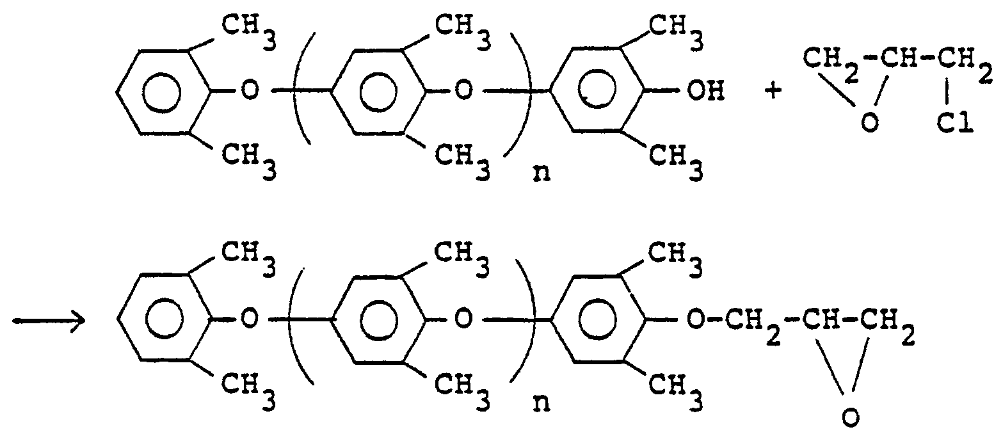

The terminal epoxydized PPO obtained as described above (100 parts by weight), 50 parts by weight of a hydrogenated 1,2-polybitadiene epoxydized at one terminal end (trial product, Mn = 3000) and PET ([η] = 0.4 dl/g, measured in ortho-chlorophenol at 30°C) were fed into a biaxial extruder set at 270°C, melted and kneaded with a residence time of 2 minutes, followed by pelletizing, to obtain a block copolymer of PPO-polyolefin-PET.

Reference Example 6-1 (method for preparation of maleated EPR)

To 100 parts by weight of an ethylene-propylene random copolymer (MFR at 190°C: 0.4 g/10 min, ethylene content: 80 mole%, crystallinity: 1%, hereinafter abbreviated as EPR), 1 part by weight of maleic anhydride and 0.05 part by weight of 2,5-dimethyl-2,5-di(tertiary butylperoxy)hexane-3 were added, and after mixing, the mixture was melted and kneaded by feeding into a monoaxial extruder (15 mmø, L/D = 28) set at 250°C. The pellets thus obtained were subjected to Soxhlet extraction with acetone for 20 hours and dried, followed by a measurement of the IR-absorption spectrum. As a result, it was found that the EPR contained 0.9% by weight of maleic anhydride grafted thereon.

Reference Example 6-2 (method for preparation of PPO-grafted polyolefin)

To 50 parts by weight of a polypropylene (produced by Mitsui Sekiyu Kagaku K.K., Hipol® B200) were added 1000 parts by weight of P-xylene, to dissolve the polymer at 125°C under a nitrogen gas stream, and 5 parts by weight of glycidyl methacrylate (GMA) and 0.5 part by weight of dicumyl peroxide were added dropwise to carry out the graft reaction. The reaction mixture was then cooled to room temperature and a large amount of acetone was added, and the precipitates were separated by filtration. The precipitated polymer was then washed repeatedly with acetone and dried in a vacuum. The modified propylene had a GMA content of 3.2% by weight and [η] = 1.80 dl/g.

Reference Example 6-3 (method for preparation of PPO-grafted polyolefin)

To 100 parts by weight of the ethylene-propylene random copolymer (EPR) having a melt index at 190°C of 0.4 g/10 min and an ethylene content of 80%, 3 parts by weight of acrylic acid and 0.05 part of weight of 2,5-dimethyl-2,5-di(tertiary butylperoxy)hexyne-3 were added and the mixture was kneaded by a monoaxial extruder (15 mmø, L/D = 28) set at 230°C, to obtain a EPR grafted with acrylic acid. An oxygen analysis found that the amount of acrylic acid grafted of the grafted product was 2.5% by weight.

Reference Example 7-1

Into a reaction vessel were charged 50 parts by weight of P-isopropenyltoluene, 50 parts by weight of N-phenylmaleimide, and 300 parts by weight of toluene, and the temperature in the system was maintained at 10°C while stirring under a nitrogen atmosphere. Then, 1.25 parts by weight of $BF_3PhOH$ were added

dropwise over 15 minutes, and after stirring for an additional 2 hours, the mixture was stirred with an addition of ammonia water for 30 minutes before stopping the reaction. Subsequently, the reaction mixture was added into a large amount of methanol to precipitate the polymer, and after filtration, the product was dried at 60 °C and 130 mmHg for 20 hours to obtain a yellow polymer.

The molecular weight of the polymer obtained was measured by GPC, and found to be $\overline{M}n$ = 579, $\overline{M}w$ = 26100, $\overline{M}w/\overline{M}n$ = 45, and the Tg as measured by DSC was found to be 121 °C.

Reference Example 7-2

The same operation as in Reference Example 7-1 was performed except for that indene was used in place of the N-phenylmaleimide used in Reference Example 7-1 and the reaction temperature was changed to -20 °C, to obtain a white polymer.

The molecular weight of this polymer as measured by GPC was $\overline{M}n$ = 1780, $\overline{M}w$ = 3400, $\overline{M}w/\overline{M}n$ = 1.91, and the Tg as measured by DSC was 121 °C.

Reference Example 7-3

The same operation as in Reference Example 1 was performed except that acenaphthylene was used in place of the N-phenylmaleimide used in Reference Example 7-1 and the reaction temperature was changed to -20 °C, to obtain a pale yellow polymer.

The molecular weight of this polymer as measured by GPC was $\overline{M}n$ = 2100, $\overline{M}w$ = 6740, Mw/Mn = 3.22, and the Tg as measured by DSC was 125 °C.

Reference Example 7-4 (method for preparation of maleated EPR)

To 100 parts by weight of an ethylene-propylene random copolymer (MFR at 190 °C: 0.4 g/10 min, ethylene content: 80 mole%, crystallinity: 1%, hereinafter abbreviated as EPR), 1 part by weight of maleic anhydride and 0.05 part by weight of 2,5-dimethyl-2,5-di(tertiary butylperoxy)hexyne-3 were added, and after mixing, the mixture was melted and kneaded by feeding into an extruder set at 250 °C. The pellets thus obtained were subjected to Soxhlet extraction with acetone for 20 hours and dried, followed by a measurement of the IR-absorption spectrum. As a result, it was found that the EPR contained 0.9% by weight of maleic anhydride grafted thereon.

Reference Example 7-5 (method for preparation of PRO-grafted polyolefin)

To 50 parts by weight of a polypropylene (produced by Mitsui Sekiyu Kagaku K.K., Hipol® B200) added 1000 parts by weight of P-xylene, to dissolve the polymer at 125 °C under a nitrogen gas stream, and 5 parts by weight of glycidyl methacrylate (GMA) and 0.5 part by weight of dicumyl peroxide were added dropwise to carry out the graft reaction. The reaction mixture was then cooled to room temperature and a large amount of acetone was added, and the precipitates were separated by filtration. The precipitated polymer was then washed repeatedly with acetone and dried in a vacuum. The modified propylene had a GMA content of 3.2% by weight and $[\eta]$ = 1.80 dl/g.

Reference Example 7-6 (method for preparation of PPO-grafted polyolefin)

To 100 parts by weight of an ethylene-propylene random copolymer (EPR) having a melt index at 190 °C of 0.4 g/10 min and an ethylene content of 80%, 3 parts by weight of acrylic acid and 0.05 part by weight of 2,5-dimethyl-2,5-di(tertiary butylperoxy)hexyne-3 were added and the mixture was kneaded by a monoaxial extruder (15 mmø, L/D = 28) set at 230 °C to obtain an EPR grafted with acrylic acid. An oxygen analysis found that the amount of acrylic acid grafted of the grafted product was 2.5% by weight.

Reference Example 8-1 (oxazoline ring containing PP)

After 100 parts by weight of polypropylene powder (produced by Mitsui Sekiyu Kagaku K.K., Hipol® B200), 1.2 parts by weight of 2-vinyl-2-oxazoline and 0.05 part by weight of 2,5-dimethyl-2,5-di(tertiary butylperoxy) hexyne-3 were mixed by a Henschel mixer, the mixture was fed into an extruder set at 230°C, followed by melting, kneading, and pelletizing. After the pellets thus obtained were subjected to Soxhlet extraction with acetone for 20 hours, the grafted amount of oxazoline ring was examined by IR-absorption spectrum and NMR spectrum. As a result, the grafted amount was found to be 0.8% by weight.

Reference Example 8-2 (oxazoline ring containing EPR)

The same operation as in Reference Example 8-1 was performed except that an ethylene-propylene random copolymer (MFR at 190°C = 0.6 g/10 min, ethylene content: 80 mole%, crystallinity: 1%, hereinafter abbreviated as EPR) was used in place of the polypropylene used in Reference Example 1 to obtain an oxazoline-grafted EPR. The grafted amount of oxazoline ring was found to be 1% by weight.

Reference Example 8-3 (oxazoline ring containing EPR)

The same operation as in Reference Example 8-2 was performed except that the amount of 2-vinyl-2-oxazoline added in Reference Example 8-2 was changed from 1.2 parts by weight to 2.3 parts by weight, to obtain an oxazoline-grafted EPR. The amount of oxazoline ring grafted was found to be 2% by weight.

Reference Example 9-1

Using a 2 liter polymerizer equipped with a stirring blade, a continuous copolymerization reaction of ethylene with 1,4,5,8-dimethano-1,2,3,4,4a,5,8,8a-octahydronaphthalene ((a) in Table 2: hereinafter abbreviated as DMON), was carried out. More specifically, while continuously feeding a cyclohexane solution of DMON at 0.4 liter per hour, so that the DMON concentration in the polymerizer became 60 g/liter, a cyclohexane solution of VO $(OC_2H_5)Cl_2$ as the catalyst at 0.7 liter per hour, so that the vanadium concentration in the polymerizer became 0.7 mmol/liter (the vanadium concentration fed at this time was 2.86-fold of the concentration in the polymerizer), a cyclohexane solution of ethyl aluminum sesquichloride $(Al(C_2H_5)_{15}Cl_{15})$ at 0.4 liter per hour, so that the aluminum concentration in the polymerizer became 5.6 moll/liter, and cyclohexane at a rate of 0.5 liter per hour, into the polymerizer from the upper part of the polymerizer, respectively, the reaction mixture was continuously withdrawn from the lower part of the polymerizer so that the amount of polymerization mixture within the polymerizer was constantly maintained at one liter. Also, ethylene was fed at a rate of 80 liter per hour, nitrogen at a rate of 80 liter per hour, and hydrogen at a rate of 0.2 liter per hour, from the upper part of the polymerizer. A copolymerization reaction was carried out at 10°C by circulating a coolant through a jacket mounted externally of the polymerizer. When the copolymerization was performed under the above conditions, a polymerized reaction mixture containing an ethylene-DMON random copolymer was obtained. The polymerization reaction was stopped by adding a mixture of cyclohexane/isopropyl alcohol (1/1) to the polymer solution withdrawn from the lower part of the polymerizer. Then, an aqueous solution having 5 ml of conc. hydrochloric acid added to 1 liter of water was placed in contact with the polymer solution at a ratio of 1:1, under compulsory stirring by a homomixer, to cause the catalyst residue to migrate into the aqueous phase. The above mixture was left to stand, and after removal of the aqueous phase, the polymer solution was purified and separated by washing twice with distilled water.

The polymer solution obtained was placed in contact with a 3-fold amount of acetone under compulsory stirring, and the solid portion was collected by filtration and washed thoroughly with acetone. Then, the solid portion obtained was thrown into acetone, at 40 g/liter, and subjected to a reaction treatment at 60°C for 2 hours. The solid portion was then collected by filtration and dried under a nitrogen stream at 130°C and 350 mmHg for 24 hours.

As described above, an ethylene-DMON copolymer was obtained at a rate of 94 g per hour. The

copolymer obtained had an ethylene content of 61.3 mole%, an intrinsic viscosity [η] of 0.85, $\overline{M}w/\overline{M}n$ by GPC measurement of 2.50, a crystallinity by X-ray diffraction of 0%, and a glass transition temperature Tg of 143 °C. The volatile component was 0.4% by weight, and the content of unreacted monomers 0.13% by weight.

Reference Example 9-2 and Reference Example 9-3

Copolymerization was conducted under the same conditions as in Reference Example 9-1, except that the copolymerization conditions were changed as shown in Table 9-2. The physical properties obtained are shown in Table 9-3.

Table 9-1 Cyclic olefin

| | | Compound name |
|---|---|---|
| (a) | 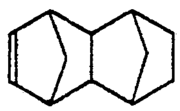 | 1,4,5,8-dimethano-1,2,3,4,4a,5,8,8a-octahydronaphthalene |
| (b) | 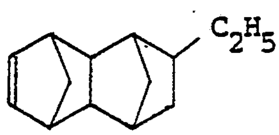 | 2-ethyl-1,4,5,8-dimethano-1,2,3,4,4a,5,8,8a-octahydronaphthalene |
| (c) | 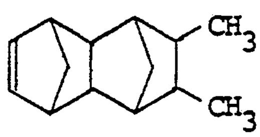 | 2,3-dimethyl-1,4,5,8-dimethano-1,2,3,4,4a,5,8,8a-octahydronaphthalene |

Table 9-2

| Reference Example | Copolymerization conditions | | | | | | Ethylene feed rate | Hydrogen feed rate | Polymerization temperature |
|---|---|---|---|---|---|---|---|---|---|
| | Cyclic olefin | | Vanadium compound | | Aluminum compound | | | | |
| | Name | Concentration in polymerizer (g/ℓ) | Name | Concentration in polymerizer (g/ℓ) | Name | Concentration in polymerizer (g/ℓ) | (ℓ/hr) | (ℓ/hr) | (°C) |
| 9-1 | (a) | 60 | $VO(OC_2H_5)Cl_2$ | 0.7 | $Al(C_2H_5)_{15}Cl_{15}$ | 5.6 | 80 | 0.2 | 10 |
| 9-2 | (b) | " | " | " | " | " | " | " | " |
| 9-3 | (c) | " | " | " | " | " | " | " | " |

Table 9-3

| Example | Polymer properties | | | | | | | |
|---|---|---|---|---|---|---|---|---|
| | Copolymer yield (g/hr) | Ethylene content (mol%) | [η] | Crystallinity (%) | DMA-Tg | $\bar{M}w/\bar{M}n$ | VM (wt.%) | Residual monomer amount (wt.%) |
| 9-1 | 104 | 61.3 | 0.85 | 0 | 143 | 2.5 | 0.4 | 0.13 |
| 9-2 | 96 | 64.8 | 0.82 | 0 | 135 | 2.3 | 0.5 | 0.12 |
| 9-3 | 94 | 63.2 | 0.83 | 0 | 140 | 2.6 | 0.4 | 0.12 |

Reference Example 10-1

To 100 parts by weight of a polypropylene (produced by Mitsui Sekiyu Kagaku K.K., Hipol® J700), 1000 parts by weight of P-xylene were added to dissolve the polymer under a nitrogen gas stream at 125° C, and 65 parts by weight of maleic anhydride and 35 parts by weight of dicumyl peroxide were added dropwise to carry out the graft reaction. The reaction mixture was then cooled to room temperature and a large amount of acetone was added, and the precipitates were separated by filtration. The precipitated polymer was then washed repeatedly with acetone, and dried to obtain a maleic anhydride-grafted PP. The amount of maleic anhydride grafted thereon was determined by an IR-absorption spectrum to be 3.0% by weight.

Reference Example 10-2

To 100 parts by weight of an ethylene-propylene random copolymer (MFR at 190° C: 0.6 g/10 min, ethylene content: 80 mole%, crystallinity: 1%, hereinafter abbreviated as EPR) were added 3 parts by weight of maleic anhydride, 1 part by weight of 2,5-dimethyl-2,5-di(tertiary butylperoxy)hexyne-3, and the mixture was fed into an extruder set at 230° C, followed by melting and kneading to obtain pellets of maleic anhydride-grafted EPR. The pellets were subjected to Soxhlet extraction with acetone for 20 hours, and after drying, the grafted amount of maleic anhydride was determined by IR-absorption spectrum to be 2% by weight.

Reference Example 10-3

An amount of 100 parts by weight of the maleic anhydride-grafted polypropylene obtained in Reference Example 10-1 (grafted amount of maleic anhydride: 3.0% by weight) and 100 parts by weight of an epoxy resin (produced by Mitsui Sekiyu Kagaku Kogyo K.K., Epomic®, R364), and 1.5 parts by weight of di-n-butylamine were fed into a Laboplastomill (produced by Toyo Seiki) set at 150° C, and the mixture was kneaded until the torque became constant to obtain a reaction mixture of the maleic anhydride-grafted PP and the epoxy resin. When the acid value and the epoxy equivalent of the reaction mixture were measured, it was confirmed that 90% or more of the maleic anhydride grafted onto the PP reacted with the epoxy resin.

Reference Example 10-4

The reaction was carried out by the same operation as used in Reference Example 10-1, except that the maleic anhydride-modified ethylene-propylene random copolymer obtained by the method in Reference Example 10-2 (the grafted amount of maleic anhydride: 2.0% by weight) was used in place of the maleic anhydride-modified PP used in Reference Example 10-1, to obtain a reaction mixture of the maleic anhydride-modified EPR and the epoxy resin.

Reference Example 11-1 (method for preparation of maleated EPR)

To 100 parts by weight of an ethylene-propylene random copolymer (MFR at 190°C: 0.4 g/10 min, ethylene content: 80 mole%, crystallinity: 1%, hereinafter abbreviated as EPR), 1 part by weight of maleic anhydride and 0.05 part by weight of 2,5-dimethyl-2,5-di(tertiary butylperoxy)hexane-3 were added, and after mixing, the mixture was melted and kneaded by feeding into a monoaxial extruder (15 mm, L/D = 28) set at 250°C. The pellets thus obtained were subjected to Soxhlet extraction with acetone for 20 hours and dried, followed by a measurement of the IR-absorption spectrum. As a result, it was found that the EPR contained 0.9% by weight of maleic anhydride grafted thereon.

Reference Example 11-2 (method for preparation of PPO-grafted polyolefin)

To 50 parts by weight of a polypropylene (produced by Mitsui Sekiyu Kagaku K.K., Hipol® B200) were added 1000 parts by weight of P-xylene to dissolve the polymer at 125°C under a nitrogen gas stream, and 5 parts by weight of glycidyl methacrylate (GMA) and 0.5 part by weight of dicumyl peroxide were added dropwise to carry out the graft reaction. The reaction mixture was then cooled to room temperature and a large amount of acetone was added, and the precipitated were separated by filtration. The precipitated polymer was then washed repeatedly with acetone and dried in a vacuum. The modified propylene had a GMA content of 3.2% by weight and [$\eta$] = 1.80 dl/g.

Reference Example 11-3 (method for preparation of PPO-grafted polyolefin)

To 100 parts by weight of an ethylene-propylene random copolymer (EPR) having a melt index at 190°C of 0.4 g/10 min and an ethylene content of 80%, 3 parts by weight of acrylic acid and 0.05 part by weight of 2,5-dimethyl-2,5-di(tertiary butylperoxy)hexyne-3 were added and the mixture was kneaded by a monoaxial extruder (15 mmø, L/D = 28) set at 230°C to obtain an EPR grafted with acrylic acid. An oxygen analysis found that the amount of acrylic acid grafted of the grafted product was 2.5% by weight.

Examples 1-1 to 1-8 and Comparative Example 1-1

The compositions shown in Table 1-1 were molded according to the method of [I] and the physical properties were evaluated. The results are shown in Table 1-1.

In the Table, Noryl (534J) is the trade name of a composition comprising PPO and polystyrene (produced by Engineering Plastics K.K.).

Table 1-1

| | | | | Example 1-1 | Example 1-2 | Example 1-3 | Example 1-4 | Example 1-5 | Example 1-6 |
|---|---|---|---|---|---|---|---|---|---|
| Compo-sition | (i) | PPO | Wt.part | 100 | 100 | 100 | 100 | 100 | 100 |
| | (ii) | PSt | Wt.part | 0 | 0 | 0 | 0 | 0 | 40 |
| | (iii) | Block or graft copolymer | Kind | Copolymer described in Reference Example 1-1 | Copolymer described in Reference Example 1-2 | Copolymer described in Reference Example 1-3 | Copolymer described in Reference Example 1-4 | Copolymer described in Reference Example 1-5 | Copolymer described in Reference Example 1-1 |
| | | | Wt.part | 15 | 15 | 15 | 40 | 15 | 15 |
| | (vi) | PP | Wt.part | 33 | 33 | 33 | 100 | 300 | 33 |
| | (v) | Filler | Kind | - | - | - | - | - | - |
| | | | Wt.part | 0 | 0 | 0 | 0 | 0 | 0 |
| Phys-ical prop-erties | Flexural modulus ($kg/cm^2$) | | | 25,000 | 20,000 | 19,000 | 16,000 | 17,000 | 20,000 |
| | Izod impact strength, notched 23°C (kg·cm/cm) | | | 7 | 20 | 25 | 40 | 25 | 23 |
| | Heat distortion temperature (°C) | | 4.6 $kg/cm^2$ | 190 | 170 | 168 | 160 | 155 | 165 |
| | | | 18.6 $kg/cm^2$ | 150 | 120 | 117 | 80 | 75 | 120 |
| | Heat deflection (mm) | | | 1 | 1 | 1 | 1 | 3 | 1 |
| | Presence of solvent crack (acetone) | | | None | None | None | None | None | None |

Table 1-1 (continued)

| | | | Example 1-7 | Example 1-8 | Comparative Example 1-1 |
|---|---|---|---|---|---|
| Compo-sition | (i) PPO | Wt.part | 100 | 100 | Noryl |
| | (ii) PSt | Wt.part | 0 | 0 | (534J) |
| | (iii) Block or graft copolymer | Kind | Copolymer described in Reference Example 1-2 | Copolymer described in Reference Example 1-3 | |
| | | Wt.part | 15 | 15 | |
| | (vi) PP | Wt.part | 33 | 50 | |
| | (v) Filler | Kind | Talc | GF (3 mm) | |
| | | Wt.part | 50 | 50 | |
| Phys-ical prop-erties | Flexural modulus ($kg/cm^2$) | | 30,000 | 70,000 | 25,000 |
| | Izod impact strength, notched 23°C ($kg\cdot cm/cm$) | | 5 | 10 | 15 |
| | Heat distortion temperature (°C) | 4.6 $kg/cm^2$ | 190 | 205 | 176 |
| | | 18.6 $kg/cm^2$ | 180 | 190 | 165 |
| | Heat deflection (mm) | | 1 | 1 | 1 |
| | Presence of solvent crack (acetone) | | None | None | Do |

Examples 2-1 to 2-8 and Comparative Example 2-1

The compositions shown in Table 2-1 were molded according to the method of [I] and the physical properties were evaluated. The results are shown in Table 2-1.

Table 2-1

| | | | Example 2-1 | Example 2-2 | Example 2-3 | Example 2-4 | Example 2-5 | Example 2-6 |
|---|---|---|---|---|---|---|---|---|
| Composition | (i) PPO | Wt.part | 100 | 100 | 100 | 100 | 100 | 100 |
| | (ii) PSt | Wt.part | 0 | 0 | 0 | 0 | 40 | 100 |
| | (iii) Block or graft copolymer | Kind | Copolymer described in Reference Example 2-1 | Copolymer described in Reference Example 2-2 | Copolymer described in Reference Example 2-3 | Copolymer described in Reference Example 2-4 | Copolymer described in Reference Example 2-5 | Copolymer described in Reference Example 2-6 |
| | | Wt.part | 15 | 15 | 15 | 40 | 15 | 15 |
| | (vi) PP | Wt.part | 33 | 33 | 33 | 100 | 300 | 33 |
| | (v) Filler | Kind | - | - | - | - | - | - |
| | | Wt.part | 0 | 0 | 0 | 0 | 0 | 0 |
| Physical properties | Flexural modulus ($kg/cm^2$) | | 26,000 | 20,000 | 22,000 | 19,000 | 20,000 | 20,000 |
| | Izod impact strength, notched 23°C (kg·cm/cm) | | 6 | 25 | 15 | 7 | 5 | 6 |
| | Heat distortion temperature (°C) | 4.6 $kg/cm^2$ | 187 | 165 | 180 | 160 | 140 | 130 |
| | | 18.6 $kg/cm^2$ | 143 | 120 | 140 | 120 | 90 | 110 |
| | Heat deflection (mm) | | 1 | 1 | 1 | 1 | 3 | 2 |
| | Presence of solvent crack (acetone) | | None | None | None | None | None | None |

Table 2-1 (continued)

| | | | | Example 2-7 | Example 2-8 | Comparative Example 2-1 |
|---|---|---|---|---|---|---|
| Compo-sition | (i) | PPO | Wt.part | 100 | 100 | Noryl |
| | (ii) | PSt | Wt.part | 0 | 0 | (534J) |
| | (iii) | Block or graft copolymer | Kind | Copolymer described in Reference Example 2-2 | Copolymer described in Reference Example 2-3 | |
| | | | Wt.part | 15 | 15 | |
| | (vi) | PP | Wt.part | 33 | 33 | |
| | (v) | Filler | Kind | Talc | GF (3 mm) | |
| | | | Wt.part | 50 | 50 | |
| Phys-ical prop-erties | Flexural modulus ($kg/cm^2$) | | | 29,000 | 65,000 | 25,000 |
| | Izod impact strength, notched 23°C (kg·cm/cm) | | | 10 | 12 | 15 |
| | Heat distortion temperature (°C) | | 4.6 $kg/cm^2$ | 185 | 200 | 176 |
| | | | 18.6 $kg/cm^2$ | 176 | 189 | 165 |
| | Heat deflection (mm) | | | 1 | 1 | 1 |
| | Presence of solvent crack (acetone) | | | None | None | Do |

Examples 3-1 to 3-8 and Comparative Example 3-1

The compositions shown in Table 3-1 were molded according to the method of [I] and the physical properties were evaluated. The results are shown in Table 3-1.

Table 3-1

| | | | | Example 3-1 | Example 3-2 | Example 3-3 | Example 3-4 | Example 3-5 | Example 3-6 |
|---|---|---|---|---|---|---|---|---|---|
| Composition | (i) | PPO | Wt.part | 100 | 100 | 100 | 100 | 100 | 100 |
| | (ii) | PSt | Wt.part | 0 | 0 | 0 | 0 | 0 | 40 |
| | (iii) | NY-6 | Wt.part | 100 | 100 | 100 | 200 | 100 | 100 |
| | (iv) | Block or graft copolymer | Kind | Copolymer described in Reference Example 3-1 | Copolymer described in Reference Example 3-2 | Copolymer described in Reference Example 3-3 | Copolymer described in Reference Example 3-4 | Copolymer described in Reference Example 3-1 | Copolymer described in Reference Example 3-1 |
| | | | Wt.part | 15 | 15 | 15 | 40 | 15 | 15 |
| | (v) | PP | Wt.part | 33 | 33 | 33 | 100 | 300 | 33 |
| | (vi) | Filler | Kind | - | - | - | - | - | - |
| | | | Wt.part | 0 | 0 | 0 | 0 | 0 | 0 |
| Physical properties | Flexural modulus ($kg/cm^2$) | | | 23,000 | 24,000 | 25,000 | 24,000 | 18,000 | 25,000 |
| | Izod impact strength, notched 23°C (kg·cm/cm) | | | 7 | 5 | 10 | 10 | 5 | 7 |
| | Heat distortion temperature (°C) | | 4.6 $kg/cm^2$ | 195 | 190 | 196 | 180 | 155 | 180 |
| | | | 18.6 $kg/cm^2$ | 170 | 160 | 180 | 120 | 90 | 160 |
| | Heat deflection (mm) | | | 1 | 1 | 1 | 1 | 3 | 1 |
| | Presence of solvent crack (acetone) | | | None | None | None | None | None | None |

Table 3-1 (continued)

| | | | Example 3-7 | Example 3-8 | Comparative Example 3-1 |
|---|---|---|---|---|---|
| Compo-sition | (i) PPO | Wt.part | 100 | 100 | Noryl |
| | (ii) PSt | Wt.part | 0 | 0 | (534J) |
| | (iii) NY-6 | Wt.part | 100 | 100 | |
| | (iv) Block or graft copolymer | Kind | Copolymer described in Reference Example 3-2 | Copolymer described in Reference Example 3-3 | |
| | | Wt.part | 15 | 15 | |
| | (v) PP | Wt.part | 33 | 33 | |
| | (vi) Filler | Kind | Talc | GF (3 mm) | |
| | | Wt.part | 80 | 80 | |
| Phys-ical prop-erties | Flexural modulus ($kg/cm^2$) | | 40,000 | 73,000 | 25,000 |
| | Izod impact strength, notched 23°C (kg·cm/cm) | | 8 | 10 | 15 |
| | Heat distortion temperature (°C) | 4.6 $kg/cm^2$ | 200 | 206 | 176 |
| | | 18.6 $kg/cm^2$ | 180 | 190 | 165 |
| | Heat deflection (mm) | | 1 | 1 | 1 |
| | Presence of solvent crack (acetone) | | None | None | Do |

Examples 4-1 to 4-8 and Comparative Example 4-1

The compositions shown in Table 4-1 were molded according to the method of [I] and the physical properties were evaluated. The results are shown in Table 4-1.

Table 4-1

| | | | Example 4-1 | Example 4-2 | Example 4-3 | Example 4-4 | Example 4-5 | Example 4-6 |
|---|---|---|---|---|---|---|---|---|
| Compo-sition | (i) PPO | Wt.part | 100 | 100 | 100 | 100 | 100 | 100 |
| | (ii) PSt | Wt.part | 0 | 0 | 0 | 0 | 0 | 40 |
| | (iii) NY-6 | Wt.part | 100 | 100 | 100 | 200 | 100 | 100 |
| | (iv) Modified olefinic polymer | Kind | Copolymer described in Reference Example 4-1 | Copolymer described in Reference Example 4-2 | Copolymer described in Reference Example 4-3 | Copolymer described in Reference Example 4-1 | Copolymer described in Reference Example 4-1 | Copolymer described in Reference Example 4-1 |
| | | Wt.part | 15 | 15 | 15 | 40 | 15 | 15 |
| | (v) PP | Wt.part | 33 | 33 | 33 | 100 | 300 | 33 |
| | (vi) Filler | Kind | - | - | - | - | - | - |
| | | Wt.part | 0 | 0 | 0 | 0 | 0 | 0 |
| Phys-ical prop-erties | Flexural modulus ($kg/cm^2$) | | 21,000 | 26,000 | 20,000 | 17,000 | 18,000 | 23,000 |
| | Izod impact strength, notched 23°C (kg·cm/cm) | | 14 | 10 | 11 | 40 | 20 | 16 |
| | Heat distortion temperature (°C) | 4.6 $kg/cm^2$ | 185 | 186 | 184 | 170 | 160 | 190 |
| | | 18.6 $kg/cm^2$ | 160 | 162 | 159 | 100 | 90 | 160 |
| | Heat deflection (mm) | | 1 | 1 | 1 | 1 | 3 | 1 |
| | Presence of solvent crack (acetone) | | None | None | None | None | None | None |

Table 4-1 (continued)

| | | | | Example 4-7 | Example 4-8 | Comparative Example 4-1 |
|---|---|---|---|---|---|---|
| Compo-sition | (i) | PPO | Wt.part | 100 | 100 | Noryl |
| | (ii) | PSt | Wt.part | 0 | 0 | (534J) |
| | (iii) | NY-6 | Wt.part | 100 | 100 | |
| | (iv) | Modified olefinic polymer | Kind | Copolymer described in Reference Example 4-2 | Copolymer described in Reference Example 4-3 | |
| | | | Wt.part | 15 | 15 | |
| | (v) | PP | Wt.part | 33 | 33 | |
| | (vi) | Filler | Kind | Talc | GF (3 mm) | |
| | | | Wt.part | 80 | 80 | |
| Phys-ical prop-erties | Flexural modulus ($kg/cm^2$) | | | 35,000 | 65,000 | 25,000 |
| | Izod impact strength, notched 23°C (kg·cm/cm) | | | 10 | 15 | 15 |
| | Heat distortion temperature (°C) | | 4.6 $kg/cm^2$ | 190 | 200 | 176 |
| | | | 18.6 $kg/cm^2$ | 170 | 190 | 165 |
| | Heat deflection (mm) | | | 1 | 1 | 1 |
| | Presence of solvent crack (acetone) | | | None | None | Do |

Examples 5-1 to 5-8 and Comparative Example 5-1

The compositions shown in Table 5-1 were molded according to the method of [I] and the physical properties were evaluated. The results are shown in Table 5-1.

Table 5-1

| | | | Example 5-1 | Example 5-2 | Example 5-3 | Example 5-4 | Example 5-5 | Example 5-6 |
|---|---|---|---|---|---|---|---|---|
| Compo-sition | (i) PPO | Wt.part | 100 | 100 | 100 | 100 | 100 | 100 |
| | (ii) PSt | Wt.part | 0 | 0 | 0 | 0 | 0 | 40 |
| | (iii) Polyalkyleneterephthalate | Kind | PBT | PBT | PBT | PBT | PBT | PBT |
| | | Wt.part | 100 | 100 | 100 | 200 | 100 | 100 |
| | (iv) Block or graft copolymer | Kind | Copolymer described in Reference Example 5-1 | Copolymer described in Reference Example 5-2 | Copolymer described in Reference Example 5-3 | Copolymer described in Reference Example 5-4 | Copolymer described in Reference Example 5-1 | Copolymer described in Reference Example 5-1 |
| | | Wt.part | 15 | 15 | 15 | 40 | 15 | 15 |
| | (v) PP | Wt.part | 33 | 33 | 33 | 100 | 300 | 33 |
| | (vi) Filler | Kind | - | - | - | - | - | - |
| | | Wt.part | 0 | 0 | 0 | 0 | 0 | 0 |
| Phys-ical prop-erties | Flexural modulus ($kg/cm^2$) | | 25,000 | 23,000 | 22,000 | 20,000 | 26,000 | 20,000 |
| | Izod impact strength, notched 23°C (kg·cm/cm) | | 4 | 3 | 7 | 15 | 3 | 5 |
| | Heat distortion temperature (°C) | 4.6 $kg/cm^2$ | 180 | 183 | 178 | 170 | 130 | 160 |
| | | 18.6 $kg/cm^2$ | 150 | 152 | 160 | 152 | 120 | 130 |
| | Heat deflection (mm) | | 1 | 1 | 1 | 1 | 4 | 1 |
| | Presence of solvent crack (acetone) | | None | None | None | None | None | None |

Table 5-1 (continued)

| | | | | Example 5-7 | Example 5-8 | Comparative Example 5-1 |
|---|---|---|---|---|---|---|
| Composition | (i) | PPO | Wt.part | 100 | 100 | Noryl |
| | (ii) | PSt | Wt.part | 0 | 0 | (534J) |
| | (iii) | Polyalkyleneterephthalate | Kind | PBT | PBT | |
| | | | Wt.part | 100 | 100 | |
| | (iv) | Block or graft copolymer | Kind | Copolymer described in Reference Example 5-2 | Copolymer described in Reference Example 5-3 | |
| | | | Wt.part | 15 | 15 | |
| | (v) | PP | Wt.part | 33 | 33 | |
| | (vi) | Filler | Kind | Talc | GF (3 mm) | |
| | | | Wt.part | 80 | 80 | |
| Physical properties | Flexural modulus ($kg/cm^2$) | | | 45,000 | 70,000 | 25,000 |
| | Izod impact strength, notched 23°C (kg·cm/cm) | | | 7 | 10 | 15 |
| | Heat distortion temperature (°C) | | 4.6 $kg/cm^2$ | 180 | 190 | 176 |
| | | | 18.6 $kg/cm^2$ | 160 | 170 | 165 |
| | Heat deflection (mm) | | | 1 | 1 | 1 |
| | Presence of solvent crack (acetone) | | | None | None | Do |

Examples 6-1 to 6-8 and Comparative Example 6-1

The compositions shown in Table 6-1 were molded according to the method of [I] and the physical properties were evaluated. The results are shown in Table 6-1.

Table 6-1

| | | | Example 6-1 | Example 6-2 | Example 6-3 | Example 6-4 | Example 6-5 | Example 6-6 |
|---|---|---|---|---|---|---|---|---|
| Composition | (i) PPO | Wt.part | 100 | 100 | 100 | 100 | 100 | 100 |
| | (ii) PSt | Wt.part | 0 | 0 | 0 | 0 | 0 | 40 |
| | (iii) Polyalkyleneterephthalate | Kind | PBT | PBT | PBT | PBT | PBT | PBT |
| | | Wt.part | 100 | 100 | 100 | 100 | 100 | 100 |
| | (iv) Modified olefinic polymer | Kind | Copolymer described in Reference Example 6-1 | Copolymer described in Reference Example 6-2 | Copolymer described in Reference Example 6-3 | Copolymer described in Reference Example 6-1 | Copolymer described in Reference Example 6-1 | Copolymer described in Reference Example 6-1 |
| | | Wt.part | 15 | 15 | 15 | 40 | 15 | 15 |
| | (v) PP | Wt.part | 33.3 | 33 | 33 | 100 | 300 | 33 |
| | (vi) Filler | Kind | - | - | - | - | - | - |
| | | Wt.part | 0 | 0 | 0 | 0 | 0 | 0 |
| Physical properties | Flexural modulus ($kg/cm^2$) | | 20,000 | 25,000 | 20,000 | 17,000 | 16,000 | 21,000 |
| | Izod impact strength, notched 23°C (kg·cm/cm) | | 16 | 4 | 14 | 30 | 20 | 10 |
| | Heat distortion temperature (°C) | 4.6 $kg/cm^2$ | 170 | 190 | 169 | 160 | 120 | 168 |
| | | 18.6 $kg/cm^2$ | 150 | 160 | 148 | 120 | 90 | 152 |
| | Heat deflection (mm) | | 1 | 1 | 1 | 1 | 3 | 1 |
| | Presence of solvent crack (acetone) | | None | None | None | None | None | None |

Table 6-1 (continued)

| | | | | Example 6-7 | Example 6-8 | Comparative Example 6-1 |
|---|---|---|---|---|---|---|
| Compo-sition | (i) | PPO | Wt.part | 100 | 100 | Noryl |
| | (ii) | PSt | Wt.part | 0 | 0 | (534J) |
| | (iii) | Polyalkyleneterephthalate | Kind | PBT | PBT | |
| | | | Wt.part | 100 | 100 | |
| | (iv) | Modified olefinic polymer | Kind | Copolymer described in Reference Example 6-2 | Copolymer described in Reference Example 6-3 | |
| | | | Wt.part | 15 | 15 | |
| | (v) | PP | Wt.part | 33 | 33 | |
| | (vi) | Filler | Kind | Talc | GF (3 mm) | |
| | | | Wt.part | 80 | 80 | |
| Phys-ical prop-erties | Flexural modulus ($kg/cm^2$) | | | 40,000 | 60,000 | 25,000 |
| | Izod impact strength, notched 23°C (kg·cm/cm) | | | 8 | 13 | 15 |
| | Heat distortion temperature (°C) | | 4.6 $kg/cm^2$ | 180 | 190 | 176 |
| | | | 18.6 $kg/cm^2$ | 160 | 180 | 165 |
| | Heat deflection (mm) | | | 1 | 1 | 1 |
| | Presence of solvent crack (acetone) | | | None | None | Do |

Examples 7-1 to 7-8 and Comparative Example 7-1

The compositions shown in Table 7-1 were molded according to the method of [I] and the physical properties were evaluated. The results are shown in Table 7-1.

Table 7-1

| | | | Example 7-1 | Example 7-2 | Example 7-3 | Example 7-4 | Example 7-5 | Example 7-6 |
|---|---|---|---|---|---|---|---|---|
| Composition | (i) PPO | Wt.part | 100 | 100 | 100 | 100 | 100 | 100 |
| | (ii) PSt | Wt.part | 0 | 0 | 0 | 0 | 0 | 40 |
| | (iii) Second aromatic vinyl copolymer | Kind | Reference Example 7-1 | Reference Example 7-2 | Reference Example 7-3 | Reference Example 7-4 | Reference Example 7-2 | Reference Example 7-1 |
| | | Wt.part | 40 | 40 | 40 | 40 | 40 | 40 |
| | (iv) Modified olefinic polymer | Kind | - | - | - | - | - | Polymer described in Reference Example 4 |
| | | Wt.part | 0 | 0 | 0 | 0 | 0 | 15 |
| | (v) PP | Wt.part | 0 | 0 | 0 | 33 | 33 | 33 |
| | (vi) Filler | Kind | - | - | - | - | - | - |
| | | Wt.part | 0 | 0 | 0 | 0 | 0 | 0 |
| Physical properties | Flexural modulus (kg/cm$^2$) | | 27,000 | 26,000 | 24,000 | 23,000 | 22,000 | 17,000 |
| | Izod impact strength, notched 23°C (kg·cm/cm) | | 4 | 4 | 3 | 5 | 4 | 15 |
| | Heat distortion temperature (°C) | 4.6 kg/cm$^2$ | 190 | 188 | 193 | 160 | 160 | 158 |
| | | 18.6 kg/cm$^2$ | 180 | 176 | 182 | 120 | 110 | 120 |
| | Heat deflection (mm) | | 0 | 1 | 1 | 3 | 5 | 3 |
| | Appearance of injection molded square plate (10 cm x 10 cm) | | Good | Good | Good | Good | Good | Good |
| | Presence of solvent crack (acetone) | | None | None | None | None | None | None |

Table 7-1 (continued)

| | | | Example 7-7 | Example 7-8 | Comparative Example 7-1 |
|---|---|---|---|---|---|
| Composition | (i) PPO | Wt.part | 100 | 100 | Noryl |
| | (ii) PSt | Wt.part | 0 | 0 | (534J) |
| | (iii) Polyalkyleneterephthalate | Kind | Reference Example 7-2 | Reference Example 7-3 | |
| | | Wt.part | 40 | 40 | |
| | (iv) Modified olefinic polymer | Kind | Copolymer described in Reference Example 7-5 | Copolymer described in Reference Example 7-6 | |
| | | Wt.part | 15 | 30 | |
| | (v) PP | Wt.part | 100 | 120 | |
| | (vi) Filler | Kind | - | Talc | |
| | | Wt.part | 0 | 80 | |
| Physical properties | Flexural modulus ($kg/cm^2$) | | 20,000 | 30,000 | 25,000 |
| | Izod impact strength, notched 23°C (kg·cm/cm) | | 8 | 10 | 15 |
| | Heat distortion temperature (°C) | 4.6 $kg/cm^2$ | 160 | 140 | 176 |
| | | 18.6 $kg/cm^2$ | 120 | 120 | 165 |
| | Heat deflection (mm) | | 4 | 5 | 1 |
| | Appearance of injection molded square plate (10 cm x 10 cm) | | Good | Good | Bad |
| | Presence of solvent crack (acetone) | | None | None | Do |

Examples of 8-1 to 8-8 and Comparative Examples 8-1

The compositions shown in Table 8-1 were molded according to the method of [I] and the physical properties were evaluated. The results are shown in Table 8-1.

Table 8-1

| | | | Example 8-1 | Example 8-2 | Example 8-3 | Example 8-4 | Example 8-5 | Example 8-6 |
|---|---|---|---|---|---|---|---|---|
| Composition | (i) PPO | Wt.part | 100 | 100 | 100 | 100 | 100 | 100 |
| | (ii) PSt | Wt.part | 0 | 0 | 0 | 0 | 0 | 40 |
| | (iii) Olefinic polymer having oxazoline ring | Kind | Copolymer described in Reference Example 8-1 | Copolymer described in Reference Example 8-2 | Copolymer described in Reference Example 8-3 | Copolymer described in Reference Example 8-1 | Copolymer described in Reference Example 8-1 | Copolymer described in Reference Example 8-1 |
| | | Wt.part | 15 | 15 | 15 | 40 | 15 | 15 |
| | (vi) PP | Wt.part | 33 | 33 | 33 | 100 | 300 | 33 |
| | (v) Filler | Kind | - | - | - | - | - | - |
| | | Wt.part | 0 | 0 | 0 | 0 | 0 | 0 |
| Physical properties | Flexural modulus ($kg/cm^2$) | | 25,000 | 17,000 | 17,500 | 20,000 | 16,000 | 25,000 |
| | Izod impact strength, notched 23°C (kg·cm/cm) | | 5 | 40 | 60 | 8 | 5 | 5 |
| | Heat distortion temperature (°C) | 4.6 $kg/cm^2$ | 180 | 170 | 170 | 170 | 160 | 160 |
| | | 18.6 $kg/cm^2$ | 160 | 150 | 153 | 150 | 120 | 130 |
| | Heat deflection (mm) | | 1 | 1 | 1 | 1 | 1 | 1 |
| | Presence of solvent crack | | None | None | None | None | None | None |

Table 8-1 (continued)

| | | | | Example 8-7 | Example 8-8 | Comparative Example 8-1 |
|---|---|---|---|---|---|---|
| Compo-sition | (i) | PPO | Wt.part | 100 | 100 | Noryl. |
| | (ii) | PSt | Wt.part | 0 | 0 | (534J) |
| | (iii) | Olefinic polymer having oxazoline ring | Kind | Copolymer described in Reference Example 8-2 | Copolymer described in Reference Example 8-3 | |
| | | | Wt.part | 15 | 15 | |
| | (vi) | PP | Wt.part | 33 | 33 | |
| | (v) | Filler | Kind | Talc | GF (3 mm) | |
| | | | Wt.part | 50 | 50 | |
| Phys-ical prop-erties | | Flexural modulus ($kg/cm^2$) | | 30,000 | 60,000 | 25,000 |
| | | Izod impact strength, notched 23°C (kg·cm/cm) | | 10 | 12 | 15 |
| | | Heat distortion temperature (°C) | 4.6 $kg/cm^2$ | 160 | 190 | 176 |
| | | | 18.6 $kg/cm^2$ | 140 | 180 | 165 |
| | | Heat deflection (mm) | | 1 | 1 | 1 |
| | | Presence of solvent crack | | None | None | Do |

Examples 9-1 to 9-8 and Comparative Example 9-1

The compositions shown in Table 9-4 were molded according to the method of [I] and the physical properties were evaluated. The results are shown in Table 9-4.

Table 9-4

| | | | Example 9-1 | Example 9-2 | Example 9-3 | Example 9-4 | Example 9-5 | Example 9-6 |
|---|---|---|---|---|---|---|---|---|
| Composition | (i) PPO | Wt.part | 100 | 100 | 100 | 100 | 100 | 100 |
| | (ii) PSt | Wt.part | 0 | 0 | 0 | 0 | 0 | 40 |
| | (iii) Cyclic olefinic polymer | Kind | Copolymer described in Reference Example 9-1 | Copolymer described in Reference Example 9-2 | Copolymer described in Reference Example 9-3 | Copolymer described in Reference Example 9-1 | Copolymer described in Reference Example 9-1 | Copolymer described in Reference Example 9-1 |
| | | Wt.part | 15 | 15 | 15 | 40 | 15 | 15 |
| | (vi) PP | Wt.part | 33 | 33 | 33 | 100 | 300 | 33 |
| | (v) Filler | Kind | - | - | - | - | - | - |
| | | Wt.part | 0 | 0 | 0 | 0 | 0 | 0 |
| Physical properties | Flexural modulus ($kg/cm^2$) | | 24,000 | 25,000 | 26,000 | 20,000 | 18,000 | 23,000 |
| | Izod impact strength, notched 23°C (kg·cm/cm) | | 4 | 3 | 4 | 4 | 5 | 3 |
| | Heat distortion temperature (°C) | 4.6 $kg/cm^2$ | 200 | 186 | 190 | 170 | 155 | 155 |
| | | 18.6 $kg/cm^2$ | 145 | 140 | 143 | 140 | 130 | 130 |
| | Heat deflection (mm) | | 1 | 1 | 1 | 1 | 3 | 3 |
| | Presence of solvent crack | | None | None | None | None | None | None |

Table 9-4 (continued)

| | | | Example 9-7 | Example 9-8 | Comparative Example 9-1 |
|---|---|---|---|---|---|
| Composition | (i) PPO | Wt.part | 100 | 100 | Noryl |
| | (ii) PSt | Wt.part | 0 | 0 | (534J) |
| | (iii) Cyclic olefinic polymer | Kind | Copolymer described in Reference Example 9-2 | Copolymer described in Reference Example 9-3 | |
| | | Wt.part | 15 | 15 | |
| | (vi) PP | Wt.part | 33 | 33 | |
| | (v) Filler | Kind | Talc | GF (3 mm) | |
| | | Wt.part | 50 | 50 | |
| Physical properties | Flexural modulus ($kg/cm^2$) | | 45,000 | 78,000 | 25,000 |
| | Izod impact strength, notched 23°C (kg·cm/cm) | | 5 | 10 | 15 |
| | Heat distortion temperature (°C) | 4.6 $kg/cm^2$ | 190 | 200 | 176 |
| | | 18.6 $kg/cm^2$ | 150 | 190 | 165 |
| | Heat deflection (mm) | | 1 | 1 | 1 |
| | Presence of solvent crack | | None | None | Do |

Examples 10-1 to 10-8 and Comparative Example 10-1

The compositions shown in Table 10-1 were molded according to the method of [I] and the physical properties were evaluated. The results are shown in Table 10-1.

Table 10-1

| | | | | Example 10-1 | Example 10-2 | Example 10-3 | Example 10-4 | Example 10-5 | Example 10-6 |
|---|---|---|---|---|---|---|---|---|---|
| Composition | (i) | PPO | Wt.part | 100 | 100 | 100 | 100 | 100 | 100 |
| | (ii) | PSt | Wt.part | 0 | 0 | 0 | 0 | 0 | 0 |
| | (iii) | Epoxy resin | Wt.part | 7.5 | 7.5 | 0 | 0 | 0 | 0 |
| | (iv) | Graft copolymer or reaction product of graft copolymer with epoxy resin | Kind | Reference Example 10-1 | Reference Example 10-2 | Reference Example 10-3 | Reference Example 10-4 | Reference Example 10-4 | Reference Example 10-4 |
| | | | Wt.part | 7.5 | 7.5 | 15 | 15 | 30 | 15 |
| | (v) | PP | Wt.part | 33 | 33 | 33 | 33 | 33 | 33 |
| | (vi) | Filler | Kind | - | - | - | - | - | - |
| | | | Wt.part | 0 | 0 | 0 | 0 | 0 | 0 |
| Physical properties | Flexural modulus ($kg/cm^2$) | | | 24,000 | 18,000 | 24,000 | 18,500 | 16,000 | 19,000 |
| | Izod impact strength, notched 23°C (kg·cm/cm) | | | 7.0 | 18 | 9.0 | 25 | 29 | 25 |
| | Heat distortion temperature (°C) | | 4.6 $kg/cm^2$ | 180 | 157 | 182 | 160 | 155 | 162 |
| | | | 18.6 $kg/cm^2$ | 160 | 110 | 163 | 108 | 91 | 102 |
| | Heat deflection (mm) | | | 1 | 1 | 1 | 1 | 3 | 1 |
| | Presence of solvent crack | | | None | None | None | None | None | None |

Table 10-1 (continued)

| | | | | Example 10-7 | Example 10-8 | Comparative Example 10-1 |
|---|---|---|---|---|---|---|
| Composition | (i) | PPO | Wt.part | 100 | 100 | Noryl |
| | (ii) | PSt | Wt.part | 0 | 0 | (534J) |
| | (iii) | Epoxy resin | Wt.part | 0 | 0 | |
| | (iv) | Graft copolymer or reaction product of graft copolymer with epoxy resin | Kind | Reference Example 10-3 | Reference Example 10-3 | |
| | | | Wt.part | 15 | 15 | |
| | (v) | PP | Wt.part | 33 | 33 | |
| | (vi) | Filler | Kind | Talc | GF | |
| | | | Wt.part | 50 | 50 | |
| Physical properties | Flexural modulus ($kg/cm^2$) | | | 31,000 | 69,000 | 25,000 |
| | Izod impact strength, notched 23°C (kg·cm/cm) | | | 5.0 | 6.0 | 15 |
| | Heat distortion temperature (°C) | | $4.6 kg/cm^2$ | 191 | 203 | 176 |
| | | | $18.6 kg/cm^2$ | 179 | 180 | 165 |
| | Heat deflection (mm) | | | 1 | 1 | 1 |
| | Presence of solvent crack (acetone) | | | None | None | Do |

Examples 11-1 to 11-8 and Comparative Example 11-1

The compositions shown in Table 11-1 were molded according to the method of [I] and the physical properties were evaluated. The results are shown in Table 11-1.

Table 11-1

| | | | | Example 11-1 | Example 11-2 | Example 11-3 | Example 11-4 | Example 11-5 | Example 11-6 |
|---|---|---|---|---|---|---|---|---|---|
| Composition | (i) | PPO | Wt.part | 100 | 100 | 100 | 100 | 100 | 100 |
| | (ii) | PSt | Wt.part | 0 | 0 | 0 | 0 | 0 | 40 |
| | (iii) | Hydrocarbon resin or its hydrogenated product | Kind | $C_9$-$C_5$ | $C_9$ | $C_9H$ | $C_9$-$C_5$ | $C_9H$ | $C_9$-$C_5$ |
| | | | Wt.part | 40 | 80 | 120 | 40 | 80 | 40 |
| | (iv) | Modified olefinic polymer | Kind | - | - | - | - | - | Reference Example 11-1 |
| | | | Wt.part | 0 | 0 | 0 | 0 | 0 | 15 |
| | (v) | PP | Wt.part | 0 | 0 | 0 | 33 | 33 | 33 |
| | | Filler (talc) | Wt.part | 0 | 0 | 0 | 0 | 0 | 0 |
| Physical properties | Flexural modulus ($kg/cm^2$) | | | 25,000 | 26,000 | 24,500 | 23,000 | 22,000 | 17,000 |
| | Izod impact strength, notched 23°C (kg·cm/cm) | | | 4 | 4 | 3 | 5 | 4 | 15 |
| | Heat distortion temperature (°C) | | 4.6 $kg/cm^2$ | 174 | 173 | 178 | 160 | 160 | 160 |
| | | | 18.6 $kg/cm^2$ | 158 | 155 | 156 | 120 | 110 | 110 |
| | Heat deflection (mm) | | | 1 | 1 | 1 | 3 | 5 | 3 |
| | Appearance of injection molded square plate (10 cm x 10 cm) | | | Good | Good | Good | Good | Good | Good |
| | Presence of solvent crack | | | None | None | None | None | None | None |

Table 11-1 (continued)

| | | | Example 11-7 | Example 11-8 | Comparative Example 11-1 |
|---|---|---|---|---|---|
| Composition | (i) PPO | Wt.part | 100 | 100 | Noryl |
| | (ii) PSt | Wt.part | 40 | 40 | (534J) |
| | (iii) Hydrocarbon resin or its hydrogenated product | Kind | $C_9$ | $C_9H$ | |
| | | Wt.part | 80 | 120 | |
| | (iv) Modified olefinic polymer | Kind | Reference Example 11-2 | Reference Example 11-3 | |
| | | Wt.part | 15 | 30 | |
| | (v) PP | Wt.part | 100 | 120 | |
| | Filler (talc) | Wt.part | 0 | 80 | |
| Physical properties | Flexural modulus ($kg/cm^2$) | | 20,000 | 30,000 | 25,000 |
| | Izod impact strength, notched 23°C (kg·cm/cm) | | 8 | 10 | 15 |
| | Heat distortion temperature (°C) | 4.6 $kg/cm^2$ | 160 | 140 | 176 |
| | | 18.6 $kg/cm^2$ | 120 | 120 | 165 |
| | Heat deflection (mm) | | 4 | 5 | 1 |
| | Appearance of injection molded square plate (10 cm x 10 cm) | | Good | Good | Bad |
| | Presence of solvent crack (acetone) | | None | None | Do |

## Claims

1. A polyphenylene ether resin composition comprising:

(i) 100 parts by weight of a polyphenylene ether;

(ii) 0 to 400 parts by weight of an aromatic vinyl polymer (I);

(iii) 1 to 400 parts by weight of a polyphenylene ether-polyolefin copolymer selected from the group consisting of:

(a) an olefinic polymer having a polyphenylene ether graft-polymerized thereon;

(b) a polyphenylene ether having an olefinic polymer graft-polymerized thereon; and

(c) a block copolymer of a polyphenylene ether and an olefinic polymer; and

(iv) 1 to 400 parts by weight of a polyolefin.

2. A polyphenylene ether resin composition as claimed in claim 1 further comprising (v) 1 to 1000 parts by weight of an inorganic or organic filler.

3. A polyphenylene ether resin composition comprising:

(i) 100 parts by weight of a polyphenylene ether;

(ii) 0 to 400 parts by weight of an aromatic vinyl polymer (I);

(iii) 1 to 400 parts by weight of a block copolymer or graft copolymer containing three components, polyphenylene ether, olefinic polymer and aromatic vinyl polymer; and

(iv) 0 to 400 parts by weight of a polyolefin.

4. A polyphenylene ether resin composition as claimed in claim 3 further comprising (v) 1 to 1000 parts by weight of an inorganic or organic filler.

5. A polyphenylene ether resin composition comprising:

(i) 100 parts by weight of a polyphenylene ether;

(ii) 0 to 400 parts by weight of an aromatic vinyl polymer (I);

(iii) 1 to 500 parts by weight of a polyamide;

(iv) 1 to 400 parts by weight of a block copolymer or graft copolymer containing at least two components from among polyphenylene ether, olefinic polymer and aromatic vinyl polymer; and

(v) 0 to 400 parts by weight of a polyolefin.

6. A polyphenylene ether resin composition as claimed in claim 5 further comprising (vi) 1 to 1000 parts by weight of an inorganic or organic filler.

7. A polyphenylene ether resin composition comprising:

(i) 100 parts by weight of polyphenylene ether;

(ii) 0 to 400 parts by weight of an aromatic vinyl polymer (I);

(iii) 1 to 500 parts by weight of a polyamide;

(iv) 1 to 400 parts by weight of a modified olefinic polymer; and

(v) 0 to 400 parts by weight of a polyolefin.

8. A polyphenylene ether resin composition as claimed in claim 7 further comprising (vi) 1 to 1000 parts by weight of an inorganic filler or an organic filler.

9. A polyphenylene ether resin composition comprising:

(i) 100 parts by weight of a polyphenylene ether;

(ii) 0 to 400 parts by weight of an aromatic vinyl polymer (I);

(iii) 1 to 500 parts by weight of a polyester;

(iv) 1 to 400 parts by weight of a block copolymer or graft copolymer containing at least two components from among polyphenylene ether, olefinic polymer and polyester; and

(v) 0 to 400 parts by weight of a polyolefin.

10. A polyphenylene ether resin composition as claimed in claim 9 further comprising (vi) 1 to 1000 parts by weight of an inorganic or organic filler.

11. A polyphenylene ether resin composition comprising:

(i) 100 parts by weight of a polyphenylene ether;

(ii) 0 to 400 parts by weight of an aromatic vinyl polymer (I);

(iii) 1 to 500 parts by weight of a polyester;

(iv) 1 to 400 parts by weight of a modified olefinic polymer; and

(v) 0 to 400 parts by weight of a polyolefin.

12. A polyphenylene ether resin composition as claimed in claim 11 further comprising (vi) 1 to 1000 parts by weight of an inorganic or organic filler.

13. A polyphenylene ether resin composition comprising:

(i) 100 parts by weight of a polyphenylene ether;

(ii) 0 to 400 parts by weight of a first aromatic vinyl polymer (I); and

(iii) 0.1 to 400 parts by weight of a second aromatic vinyl polymer (II) which is a copolymer of (a) an aromatic vinyl monomer and (b) a monomer having a cyclic structure in which at least one carbon-carbon bond forming the cyclic structure is a double bond other than aromatic double bond, having a glass transition temperature Tg of 100 to 200 °C, or a hydrogenated product thereof.

14. A polyphenylene ether resin composition as claimed in claim 13 further comprising (iv) 1 to 400 parts by weight of a polyolefin.

15. A polyphenylene ether resin composition as claimed in claim 14 further comprising (v) 1 to 400 parts by weight of a modified olefinic polymer.

16. A polyphenylene ether resin composition comprising:

(i) 100 parts by weight of a polyphenylene ether;

(ii) 0 to 400 parts by weight of an aromatic vinyl polymer (I);

(iii) 1 to 400 parts by weight of an olefinic polymer having an oxazoline ring; and

(iv) 0 to 400 parts by weight of a polyolefin.

17. A polyphenylene ether resin composition as claimed in claim 16 further comprising (v) 1 to 1000 parts by weight of an inorganic or organic filler.

18. A polyphenylene ether resin composition comprising:

(i) 100 parts by weight of a polyphenylene ether;

(ii) 0 to 400 parts by weight of an aromatic vinyl polymer (I);

(iii) 1 to 400 parts by weight of a cyclic olefinic copolymer; and

(iv) 0 to 400 parts by weight of a polyolefin.

19. A polyphenylene ether resin composition as claimed in claim 18 further comprising (vi) 1 to 1000 parts by weight of an inorganic or organic filler.

20. A polyphenylene ether resin composition comprising:

(i) 100 parts by weight of a polyphenylene ether;

(ii) 0 to 400 parts by weight of an aromatic vinyl polymer (I);

(iii) 0.1 to 400 parts by weight of an epoxy resin;

(iv) 0.1 to 400 parts by weight of a modified olefinic polymer containing an unsaturated carboxylic acid or a derivative component thereof; and

(v) 0 to 400 parts by weight of a polyolefin.

21. A polyphenylene ether resin composition as claimed in claim 20 further comprising (vi) an inorganic or organic filler.

22. A polyphenylene ether resin composition comprising:

(i) 100 parts by weight of a polyphenylene ether;

(ii) 0 to 400 parts by weight of an aromatic vinyl polymer (I); and

(iii) 0.1 to 400 parts by weight of a hydrocarbon resin having a glass transition temperature lower than 100 °C, or a hydrogenated product thereof, formulated therein.

23. A polyphenylene ether resin composition as claimed in claim 22 further comprising (iv) 0 to 400 parts by weight of a polyolefin.

24. A polyphenylene ether resin composition as claimed in claim 23 further comprising (v) 1 to 400 parts by weight of a modified olefinic polymer.